# EUROPÄISCHE PATENTANMELDUNG

(11) **EP 3 150 883 A1**
(43) Veröffentlichungstag der Anmeldung: **05.04.2017**
(21) Anmeldenummer: 15187818.8
(22) Anmeldetag: 01.10.2015
(51) Int. Cl.: F16H 3/66

(54) **GETRIEBE FÜR EIN KRAFTFAHRZEUG, SOWIE ANTRIEBSSTRANG FÜR EIN KRAFTFAHRZEUG**

(71) Anmelder: ZF Friedrichshafen AG, 88046 Friedrichshafen (DE)
(72) Erfinder: Beck, Stefan, 88097 Eriskirch (DE); Horn, Matthias, 88069 Tettnang (DE); Brehmer, Martin, 88069 Tettnang (DE); Kaltenbach, Johannes, 88048 Friedrichshafen (DE); King, Julian, 6830 Rankweil (AT); Moraw, Jens, 88046 Friedrichshafen (DE); Münch, Eckehard, 32257 Bünde (DE); Niederbrucker, Gerhard, 88046 Friedrichshafen (DE); Pawlakowitsch, Juri, 88263 Horgenzell (DE); Scharr, Stephan, 88045 Friedrichshafen (DE); Warth, Viktor, 88048 Friedrichshafen (DE); Wechs, Michael, 88138 Weißensberg (DE); Ziemer, Peter, 88069 Tettnang (DE); Griesmeier, Uwe, 88677 Markdorf (DE); Kuberczyk, Raffael, 88212 Ravensburg (DE)

(57) **Zusammenfassung**

Getriebe (G) für ein Kraftfahrzeug, wobei das Getriebe (G) eine Antriebswelle (GW1), eine Abtriebswelle (GW2), einen ersten, zweiten und dritten Planetenradsatz (P1, P2, P3) sowie zumindest sechs Schaltelemente (03, 06, 07, 14, 15, 57) aufweist, wobei durch selektives Schließen von drei der sechs Schaltelemente (03, 06, 07, 14, 15, 57) sieben Vorwärtsgänge (1-7) zwischen der Antriebswelle (GW1) und der Abtriebswelle (GW2) schaltbar sind, sowie Antriebsstrang für ein Kraftfahrzeug mit einem solchen Getriebe (G).

## Beschreibung

Die Erfindung betrifft ein Getriebe für ein Kraftfahrzeug, sowie einen Antriebsstrang für ein Kraftfahrzeug mit einem solchen Getriebe. Ein Getriebe bezeichnet hier insbesondere ein mehrgängiges Getriebe, bei dem eine Vielzahl von Gängen, also feste Übersetzungsverhältnisse zwischen der Antriebswelle und der Abtriebswelle des Getriebes, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Die Patentanmeldung DE 199 12 480 A1 der Anmelderin beschreibt ein automatisch schaltbares Kraftfahrzeuggetriebe mit drei Einsteg-Planetensätzen, drei Bremsen und zwei Kupplungen zum Schalten von sechs Vorwärtsgängen und einem Rückwärtsgang, sowie einer Antriebswelle und einer Abtriebswelle. Die Antriebswelle ist direkt mit dem Sonnenrad des zweiten Planetensatzes verbunden, und über die erste Kupplung mit dem Sonnenrad des ersten Planetensatzes und über die zweite Kupplung mit dem Steg des ersten Planetensatzes verbindbar. Das Sonnenrad des ersten Planetensatzes ist über die erste Bremse, der Steg des ersten Planetensatzes über die zweite Bremse und das Sonnenrad des dritten Planetensatzes über die dritte Bremse mit dem Gehäuse verbindbar. Der Steg des ersten Planetensatzes ist mit dem Hohlrad des zweiten Planetensatzes verbunden. Der Steg des zweiten Planetensatzes ist mit dem Hohlrad des dritten Planetensatzes verbunden. Das Hohlrad des ersten Planetensatzes ist mit dem Steg des dritten Planetensatzes und mit der Abtriebswelle verbunden. Zusätzlich können Freiläufe an jeder Stelle des Getriebes eingesetzt werden, beispielsweise zwischen einer Welle und dem Gehäuse.

Die Patentanmeldung DE 101 62 873 A1 der Anmelderin zeigt in Fig. 3 ein Mehrstufengetriebe in Planetenbauweise, dessen Aufbau zu dem oben angeführten Getriebe sehr ähnlich ist. Die direkte Verbindung zwischen der Antriebswelle und dem Sonnenrad des zweiten Planetenradsatzes ist durch eine schaltbare Verbindung ersetzt, indem eine zusätzliche Kupplung bereitgestellt wird.

Es ist Aufgabe der Erfindung, die im Stand der Technik bekannten Getriebe weiterzuentwickeln, sodass zumindest sieben Vorwärtsgänge zur Verfügung stehen.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das erfindungsgemäße Getriebe weist eine Antriebswelle, eine Abtriebswelle, drei Planetenradsätze, sowie sechs Schaltelemente auf. Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Jeder der drei Planetenradsätze weist ein erstes, zweites und drittes Element auf. Das erste Element wird stets durch das Sonnenrad des jeweiligen Planetenradsatzes gebildet. Bei einer Ausbildung als Minus-Radsatz wird das zweite Element durch den Steg des jeweiligen Planetenradsatzes gebildet, und das dritte Element durch das Hohlrad des jeweiligen Planetenradsatzes. Bei einer Ausbildung als Plus-Radsatz wird das zweite Element durch das Hohlrad des jeweiligen Planetenradsatzes gebildet, und das dritte Element durch den Steg des jeweiligen Planetenradsatzes. Bei dem vorliegenden Getriebe eignet sich besonders der zweite Planetenradsatz zur Ausbildung als Minus- oder Plus-Radsatz. Wird ein Minus-Radsatz durch einen Plus-Radsatz ersetzt, so ist neben der veränderten Anbindung der Elemente Steg und Hohlrad der Betrag der Standgetriebeübersetzung um den Wert Eins zu erhöhen, um dieselbe Übersetzungswirkung zu erzielen.

Die Abtriebswelle ist mit dem dritten Element des ersten Planetenradsatzes und mit dem zweiten Element des dritten Planetenradsatzes ständig verbunden. Das zweite Element des ersten Planetenradsatzes ist mit dem dritten Element des dritten Planetenradsatzes ständig verbunden.

Das Getriebe weist eine erste Koppelung und eine zweite Koppelung auf. Die erste Koppelung besteht zwischen dem ersten Element des dritten Planetenradsatzes und einem drehfesten Bauelement des Getriebes, beispielsweise dem Getriebegehäuse. Die zweite Koppelung besteht zwischen dem zweiten Element des zweiten Planetenradsatzes und dem dritten Element des dritten Planetenradsatzes. Eine der beiden Koppelungen ist durch eine ständige drehfeste Verbindung gebildet, während die verbleibende der beiden Koppelungen durch eine mittels des ersten Schaltelements schaltbare Verbindung gebildet ist. Durch Schließen des ersten Schaltelements wird somit eine Drehmomentübertragung zwischen den Elementen des dritten Planetenradsatzes ermöglicht.

Durch Schließen des zweiten Schaltelements ist das zweite Element des ersten Planetenradsatzes drehfest festsetzbar. Durch Schließen des dritten Schaltelements ist das erste Element des ersten Planetenradsatzes drehfest festsetzbar. Durch Schließen des vierten Schaltelements ist die Antriebswelle mit dem zweiten Element des zweiten Planetenradsatzes verbindbar. Durch Schließen des fünften Schaltelements ist die Antriebswelle mit dem ersten Element des zweiten Planetenradsatzes verbindbar. Durch Schließen des sechsten Schaltelements ist das erste Element des zweiten Planetenradsatzes mit dem ersten Element des ersten Planetenradsatzes verbindbar.

Ein Getriebe mit dieser erfindungsgemäßen Zuordnung der einzelnen Getriebeelemente ermöglicht die Bildung von sieben Vorwärtsgängen, was nachfolgend detailliert beschrieben wird. Zudem weist ein solches Getriebe einen kompakten Aufbau, geringe Bauteilbelastungen sowie einen guten Verzahnungswirkungsgrad auf.

Durch selektives Schließen von drei der sechs Schaltelemente sind sieben Vorwärtsgänge zwischen der Antriebswelle und der Abtriebswelle darstellbar. Der erste Vorwärtsgang wird durch Schließen des ersten Schaltelements, des zweiten Schaltelements und des fünften Schaltelements gebildet. Der zweite Vorwärtsgang wird durch Schließen des ersten Schaltelements, des dritten Schaltelements und des fünften Schaltelements gebildet. Der dritte Vorwärtsgang wird durch Schließen des ersten Schaltelements, des fünften Schaltelements und des sechsten Schaltelements gebildet. Der vierte Vorwärtsgang wird durch Schließen des ersten Schaltelements, des vierten Schaltelements und einem weiteren der sechs Schaltelemente gebildet, also dem zweiten, dritten, fünften oder sechsten Schaltelement. Es bestehen somit vier Möglichkeiten zur Bildung des vierten Vorwärtsganges. Durch Schließen des ersten und vierten Schaltelements ist das Drehzahlverhältnis zwischen Antriebswelle und Abtriebswelle bereits definiert. Durch Schließen eines weiteren Schaltelements werden auch die Drehzahlverhältnisse der Elemente des ersten und zweiten Planetenradsatzes festgelegt. Der fünfte Vorwärtsgang wird durch Schließen des vierten Schaltelements, des fünften Schaltelements und des sechsten Schaltelements gebildet. Der sechste Vorwärtsgang wird durch Schließen des dritten Schaltelements, des vierten Schaltelements und des fünften Schaltelements gebildet. Der siebente Vorwärtsgang wird durch Schließen des dritten Schaltelements, des vierten Schaltelements und des sechsten Schaltelements gebildet. Dadurch wird, bei geeigneter Wahl der Standgetriebeübersetzungen der Planetenradsätze, eine für die Anwendung im Kraftfahrzeug gut geeignete Übersetzungsreihe erzielt. Zudem weisen zwei benachbarte Vorwärtsgänge stets zwei Schaltelemente auf, die in beiden diesen Gängen geschlossen sind. Dies vereinfacht den Schaltvorgang und verkürzt die Schaltdauer zwischen benachbarten Vorwärtsgängen. Da das erste Schaltelement und das fünfte Schaltelement zumindest im ersten bis dritten Vorwärtsgang geschlossen sind, ermöglicht das Schaltschema einen derart vereinfachten Schaltvorgang zwischen jedem der ersten drei Vorwärtsgänge. Von den vier Möglichkeiten zur Bildung des vierten Vorwärtsganges wird jene Variante bevorzugt, in der das fünfte Schaltelement an der Bildung des vierten Vorwärtsganges beteiligt ist. Dadurch kann bei einem Schaltvorgang zwischen dritten und vierten Vorwärtsgang und bei einem Schaltvorgang zwischen vierten und fünften Vorwärtsgang das fünfte Schaltelement geschlossen bleiben.

Prinzipiell kann jedes der sechs Schaltelemente als formschlüssiges Schaltelement, also beispielsweise als Klauenkupplung, oder als kraftschlüssiges Schaltelement ausgebildet sein, also beispielsweise als Lamellenkupplung. Vorzugsweise sind das zweite Schaltelement und/oder das fünfte Schaltelement als formschlüssiges Schaltelement ausgebildet. Formschlüssige Schaltelemente stellen im geschlossenen Zustand die Verbindung durch Formschluss her, und zeichnen sich im geöffneten Zustand durch geringere Schleppverluste als kraftschlüssige Schaltelemente aus. Durch die im geöffneten Zustand geringen Schleppverluste wird der Wirkungsgrad des Getriebes verbessert, besonders da das zweite Schaltelement lediglich im ersten der sieben Vorwärtsgange geschlossen sein muss, sofern es nicht zur Bildung des vierten Vorwärtsganges beiträgt. Bei Verwendung des Getriebes im KraftfahrzeugAntriebsstrang ist das zweite Schaltelement daher überwiegend geöffnet. Der mechanische Wirkungsgrad des Kraftfahrzeug-Antriebsstranges kann mit einem derart ausgebildeten Getriebe entsprechend verbessert werden. Gemäß einer alternativen Ausführung können das zweite und/oder das fünfte Schaltelement auch als kraftschlüssige Schaltelemente ausgebildet sein, beispielsweise als Stahl-Stahl-Element, bei dem die einander zugeordneten Reibflächen einen hohen Reibungskoeffizienten aufweisen. Das zweite und/oder fünfte Schaltelement kann auch als Bandbremse ausgebildet sein.

Gemäß einer ersten Ausführungsform sind äußere Schnittstellen der Antriebswelle und der Abtriebswelle koaxial zueinander und an gegenüberliegenden axialen Enden des Getriebes angeordnet. Von den drei Planetenradsätzen weist dabei der dritte Planetenradsatz den größten axialen Abstand zur äußeren Schnittstelle der Antriebswelle auf. Eine solche Anordnung eignet sich besonders zur Anwendung des Getriebes in einem Kraftfahrzeug mit parallel zur Fahrtrichtung des Kraftfahrzeugs ausgerichtetem Antriebsstrang.

Gemäß einer zweiten Ausführungsform sind äußere Schnittstellen der Antriebswelle und Abtriebswelle koaxial zueinander angeordnet, wobei von den drei Planetenradsätzen dabei der dritte Planetenradsatz den kürzesten axialen Abstand zur äußeren Schnittstelle der Antriebswelle aufweist. Die äußere Schnittstelle der Abtriebswelle weist dabei eine Verzahnung auf, welche mit einer Verzahnung einer zur Hauptachse des Getriebes achsparallel angeordneten Welle kämmt. Auf dieser Welle kann beispielsweise das Achsdifferential eines Antriebsstrangs angeordnet sein. Eine solche Anordnung eignet sich besonders zur Anwendung des Getriebes in einem Kraftfahrzeug mit quer zur Fahrtrichtung des Kraftfahrzeugs ausgerichtetem Antriebsstrang.

Gemäß einer möglichen Ausgestaltung weist das Getriebe ein siebentes Schaltelement auf. Das siebente Schaltelement kann an zwei verschiedenen Wirkverbindungen angeordnet sein: durch Schließen des siebenten Schaltelements ist das erste Element des ersten Planetenradsatzes entweder mit dem zweiten Element des zweiten Planetenradsatzes oder mit dem zweiten Element des ersten Planetenradsatzes verbindbar. Durch das siebente Schaltelement sind acht Vorwärtsgänge zwischen Antriebswelle und Abtriebswelle schaltbar, wie nachfolgend detailliert erläutert ist.

Durch selektives Schließen von drei der sieben Schaltelemente sind acht Vorwärtsgänge zwischen der Antriebswelle und der Abtriebswelle darstellbar. Der erste Vorwärtsgang wird durch Schließen des ersten Schaltelements, des zweiten Schaltelements und des fünften Schaltelements gebildet. Der zweite Vorwärtsgang wird durch Schließen des ersten Schaltelements, des dritten Schaltelements und des fünften Schaltelements gebildet. Der dritte Vorwärtsgang wird durch Schließen des ersten Schaltelements, des fünften Schaltelements und des siebenten Schaltelements gebildet. Der nunmehr vierte Vorwärtsgang wird durch Schließen des ersten Schaltelements, des fünften Schaltelements und des sechsten Schaltelements gebildet. Der fünfte Vorwärtsgang wird durch Schließen des ersten Schaltelements, des vierten Schaltelements und einem weiteren der sieben Schaltelemente gebildet, also dem zweiten, dritten, fünften, sechsten oder siebenten Schaltelement. Es bestehen somit fünf Möglichkeiten zur Bildung des vierten Vorwärtsganges. Durch Schließen des ersten und vierten Schaltelements ist das Drehzahlverhältnis zwischen Antriebswelle und Abtriebswelle bereits definiert. Durch Schließen eines weiteren Schaltelements werden auch die Drehzahlverhältnisse der Elemente des ersten und zweiten Planetenradsatzes festgelegt. Der nunmehr sechste Vorwärtsgang wird durch Schließen von drei der vierten bis siebenten Schaltelemente gebildet. Im sechsten Vorwärtsgang werden die drei Planetenradsätze verblockt, so dass die Elemente der drei Planetenradsätze die gleiche Drehzahl aufweisen. Dies kann durch Schließen von drei der folgenden Schaltelemente erreicht werden: viertes, fünftes, sechstes und siebentes Schaltelement. Der siebente Vorwärtsgang wird durch Schließen des dritten Schaltelements, des vierten Schaltelements und des fünften Schaltelements gebildet. Der achte Vorwärtsgang wird durch Schließen des dritten Schaltelements, des vierten Schaltelements und des sechsten Schaltelements gebildet. Von den vier Varianten zur Bildung des sechsten Vorwärtsganges wird jene Variante bevorzugt, in der das vierte, fünfte und sechste Schaltelement geschlossen sind. Dies erleichtert den Schaltvorgang zwischen fünften und sechsten Vorwärtsgang, sowie zwischen sechsten und siebenten Vorwärtsgang.

Vorzugsweise wird ein Rückwärtsgang zwischen der Antriebswelle und der Abtriebswelle durch Schließen des zweiten Schaltelemente, des fünften Schaltelements und des sechsten Schaltelements gebildet. Da im ersten Vorwärtsgang ebenso das zweite und fünfte Schaltelement geschlossen sind, ist ein Umschaltvorgang zwischen erstem Vorwärtsgang und Rückwärtsgang besonders einfach darstellbar.

Wird durch Schließen des siebenten Schaltelements das erste Element des ersten Planetenradsatzes mit dem zweiten Element des zweiten Planetenradsatzes verbunden, so steht alternativ oder ergänzend zum Rückwärtsgang ein zweiter und/oder dritter Rückwärtsgang zwischen Antriebswelle und Abtriebswelle zur Verfügung. Der zweite Rückwärtsgang wird dabei durch Schließen des zweiten, fünften und siebenten Schaltelements gebildet. Der dritte Rückwärtsgang wird durch Schließen des dritten, fünften, und siebenten Schaltelements gebildet.

Vorzugsweise umfasst das Getriebe eine elektrische Maschine mit einem drehfesten Stator und einem drehbaren Rotor. Der Rotor ist dabei entweder mit der Antriebswelle oder mit dem ersten Element des zweiten Planetenradsatzes ständig verbunden. Die ständige Verbindung kann dabei als direkte Verbindung oder über ein festes Übersetzungsverhältnis ausgebildet sein, beispielsweise über einen zusätzlichen Planetenradsatz, wobei ein Element dieses Planetenradsatzes drehfest festgesetzt ist. Beispielsweise könnte dessen Sonnenrad ständig drehfest festgesetzt, dessen Steg mit der Antriebswelle, bzw. dem ersten Element des zweiten Planetenradsatzes verbunden und dessen Hohlrad mit dem Rotor der elektrischen Maschine verbunden sein, sodass die Drehzahl des Rotors im Vergleich zum Anbindungselement vergrößert wird. Durch die elektrische Maschine kann die Funktionalität des Getriebes erweitert werden, wodurch sich das Getriebe für den Antriebsstrang eines Hybridfahrzeugs eignet. Die Anbindung des Rotors an die Antriebswelle erlaubt die Nutzung sämtlicher Vorwärtsgänge bei Antrieb des Hybridfahrzeugs mittels der elektrischen Maschine. Die Anbindung des Rotors an das erste Element des zweiten Planetenradsatzes erlaubt unter Anderem einen stufenlosen Betrieb des Getriebes.

Das Getriebe kann eine Anschlusswelle aufweisen, welche als Schnittstelle zu einer getriebeexternen Antriebseinheit dient, beispielsweise einer Verbrennungskraftmaschine. Die Anschlusswelle ist über eine Trennkupplung mit der Antriebswelle verbindbar. Alternativ dazu kann die Trennkupplung samt der Anschlusswelle auch außerhalb des Getriebes angeordnet sein. Die Trennkupplung ist, als Bestandteil des Getriebes, vorzugsweise radial innerhalb der elektrischen Maschine, besonders bevorzugt innerhalb des Rotors angeordnet. Dadurch wird eine kompakte Ausbildung des Getriebes begünstigt. Durch Öffnen der Trennkupplung kann das Kraftfahrzeug mittels der elektrischen Maschine in sämtlichen Vorwärtsgängen des Getriebes angetrieben werden, ohne die getriebeexterne Antriebseinheit mitzuschleppen. Die Trennkupplung kann als formschlüssiges oder als kraftschlüssiges Schaltelement ausgebildet sein.

Ist der Rotor an das erste Element des zweiten Planetenradsatzes angebunden, so ist bei einer Ausführung des Getriebes mit sechs Schaltelementen die Bildung von drei elektrisch antreibbaren Vorwärtsgängen zwischen dem ersten Element des zweiten Planetenradsatzes und der Abtriebswelle möglich. Dabei sind in jedem der dreielektrisch antreibbaren Vorwärtsgänge zwei der sechs Schaltelemente geschlossen. Der erste elektrisch antreibbare Vorwärtsgang wird durch Schließen des ersten Schaltelements und des zweiten Schaltelements gebildet. Der zweite elektrisch antreibbare Vorwärtsgang wird durch Schließen des ersten Schaltelements und des dritten Schaltelements gebildet. Der dritte elektrisch antreibbare Vorwärtsgang wird durch Schließen des ersten Schaltelements und des sechsten Schaltelements gebildet. Bei einem Schaltvorgang zwischen den drei elektrisch antreibbaren Vorwärtsgängen muss je nur ein Schaltelement geöffnet und ein Schaltelement geschlossen werden, da das erste Schaltelement in allen drei elektrisch antreibbaren Vorwärtsgängen geschlossen ist. Dies erleichtert den Schaltvorgang zwischen den drei elektrisch antreibbaren Vorwärtsgängen. In allen drei elektrisch antreibbaren Vorwärtsgängen sind das vierte und fünfte Schaltelement geöffnet, wodurch kein Drehmoment auf die Antriebswelle übertragen wird. Die Trennkupplung zwischen der Antriebswelle und der getriebeexternen Antriebseinheit kann somit entfallen.

Darüber hinaus ist auch die Bildung eines elektrisch antreibbaren Rückwärtsganges zwischen dem ersten Element des zweiten Planetenradsatzes und der Abtriebswelle möglich, in dem das zweite Schaltelement und das sechste Schaltelement geschlossen werden. Prinzipiell könnte eine Rückwärtsdrehung der Abtriebswelle auch durch die am ersten Element des zweiten Planetenradsatzes angebundene elektrische Maschine erfolgen, indem eine der drei elektrisch antreibbaren Vorwärtsgänge eingelegt wird und der Rotor entgegen einer Vorzugsdrehrichtung angetrieben wird. Erfolgt die Hydraulikfluidversorgung des Getriebes, beispielsweise zur Betätigung von ausgewählten Schaltelementen und/oder zur Schmierung, durch eine von einer Getriebewelle angetriebenen Hydraulikfluidpumpe, so müsste diese Pumpe dabei auch bei Rückwärtsdrehung Hydraulikfluid bereitstellen können. Durch Bildung des elektrisch antreibbaren Rückwärtsganges kann die Pumpe so angeordnet werden, dass sie stets in einer definierten Drehrichtung betrieben wird. Bevorzugt ist die Pumpe an jener Welle angebunden, die mit dem ersten Element des zweiten Planetenradsatzes verbunden ist.

Soll das Kraftfahrzeug ausgehend von einem elektrischen Fahrbetrieb in einen verbrennungsmotorischen Betrieb oder einen hybridischen Betrieb wechseln, so kann von jedem der drei elektrisch antreibbaren Gänge in einen passenden Vorwärts, bzw. Rückwärtsgang gewechselt werden, indem das fünfte Schaltelement geschlossen wird. Durch Schließen des fünften Schaltelements erfolgt ein Wechsel vom elektrisch antreibbaren Rückwärtsgang in den eigentlichen Rückwärtsgang. Durch Schließen des fünften Schaltelements erfolgt ein Wechsel vom ersten elektrisch antreibbaren Vorwärtsgang in den ersten Vorwärtsgang. Durch Schließen des fünften Schaltelements erfolgt ein Wechsel vom zweiten elektrisch antreibbaren Vorwärtsgang in den zweiten Vorwärtsgang. Durch Schließen des fünften Schaltelements erfolgt ein Wechsel vom dritten elektrisch antreibbaren Vorwärtsgang in den dritten Vorwärtsgang. Durch Schließen des vierten Schaltelements kann ausgehend vom ersten, zweiten oder dritten elektrisch antreibbaren Vorwärtsgang auch in den vierten Vorwärtsgang geschalten werden.

Ist der Rotor an das erste Element des zweiten Planetenradsatzes angebunden, und weist das Getriebe auch das siebente Schaltelement auf, so ist die Bildung von zumindest fünf elektrisch antreibbare Vorwärtsgänge zwischen dem ersten Element des zweiten Planetenradsatzes und der Abtriebswelle möglich. Dabei sind in jedem der fünf antreibbaren Vorwärtsgänge zwei der sechs Schaltelemente geschlossen. Der erste elektrisch antreibbare Vorwärtsgang wird durch Schließen des ersten Schaltelements und des zweiten Schaltelements gebildet. Der zweite elektrisch antreibbare Vorwärtsgang wird durch Schließen des ersten Schaltelements und des dritten Schaltelements gebildet. Der dritte elektrisch antreibbare Vorwärtsgang wird durch Schließen des ersten Schaltelements und des siebenten Schaltelements gebildet. Der vierte elektrisch antreibbare Vorwärtsgang wird durch Schließen des ersten Schaltelements und des sechsten Schaltelements gebildet. Der fünfte elektrisch antreibbare Vorwärtsgang wird durch Schließen des sechsten Schaltelements und des siebenten Schaltelements gebildet. Durch diese beiden zusätzlichen elektrisch antreibbaren Vorwärtsgänge wird der Übergang von elektromotorischer Fahrt zu verbrennungsmotorischer Fahrt bei hohen Fahrzeug-Geschwindigkeiten verbessert, da ausgehend vom fünften elektrisch antreibbaren Vorwärtsgang durch Schließen des vierten oder des fünften Schaltelements ein direkter Schaltvorgang in den sechsten von acht Vorwärtsgängen möglich ist.

Wird durch Schließen des siebenten Schaltelements das erste Element des ersten Planetenradsatzes mit dem zweiten Element des zweiten Planetenradsatzes verbunden, und ist der Rotor an das erste Element des zweiten Planetenradsatzes angebunden, so ist die Bildung von zwei weiteren elektrisch antreibbaren Rückwärtsgängen zwischen dem ersten Element des zweiten Planetenradsatzes und der Abtriebswelle möglich. Dazu müssen das siebente Schaltelement sowie das zweite oder dritte Schaltelement geschlossen sein. Die beiden weiteren elektrisch antreibbaren Rückwärtsgänge können den zuvor beschriebenen elektrisch antreibbaren Rückwärtsgang ergänzen oder ersetzen.

Ist der Rotor mit dem ersten Element des zweiten Planetenradsatzes verbunden, so ist die Ausbildung zumindest eines Überlagerungs-Betriebsmodus möglich. Der Überlagerungs-Betriebsmodus ergibt sich dabei durch Schließen des vierten Schaltelements und durch Schließen des sechsten oder des dritten Schaltelements. Die übrigen Schaltelemente sind dabei geöffnet. Durch Schließen des vierten Schaltelements ist die Antriebswelle mit dem zweiten Element des zweiten Planetenradsatzes verbunden, wodurch eine an der Antriebswelle vorgegebene Drehzahl an diesem Element anliegt. Durch Vorgabe der Rotordrehzahl ist die Drehzahl des ersten Elements des zweiten Planetenradsatzes festlegbar. Dadurch ist die Drehzahl des dritten Elements des zweiten Planetenradsatzes festgelegt, und stufenlos variierbar. Durch Schließen des sechsten oder des dritten Schaltelements wird die am dritten Element des zweiten Planetenradsatzes anliegende Leistung an die Abtriebswelle übertragen. Dadurch kann beispielsweise die Abtriebsdrehzahl bei vorgegebener Drehzahl der Antriebswelle und Vorgabe der Rotordrehzahl stufenlos verändert werden. Somit kann bei Verwendung des Getriebes im Kraftfahrzeugantriebsstrang auch ein Anfahrvorgang dargestellt werden, ohne ein Schaltelement des Getriebes als Anfahrelement im Schlupfbetrieb zu halten. Wird durch Schließen des siebenten Schaltelements das erste Element des ersten Planetenradsatzes mit dem zweiten Element des zweiten Planetenradsatzes verbunden, so ergibt sich durch Schließen des vierten Schaltelements und des siebenten Schaltelements eine weitere Möglichkeit zur Bildung eines solchen Überlagerungs-Betriebsmodus.

Prinzipiell kann dem Getriebe in bekannter Weise ein Anfahrelement vorangeschaltet werden, beispielsweise ein hydrodynamischer Drehmomentwandler oder eine Reibkupplung. Ein solches Anfahrelement kann auch integraler Bestandteil des Getriebes sein. Das Anfahrelement ermöglicht bei Verwendung des Getriebes im KraftfahrzeugAntriebsstrang einen Anfahrvorgang, indem es einen Schlupf zwischen Verbrennungsmotor und Abtriebswelle ermöglicht. Bevorzugt ist ein solches Anfahrelement jedoch innerhalb des Getriebes ausgebildet, indem das erste Schaltelement als Reibschaltelement ausgebildet wird. Durch Schlupfbetrieb des ersten Schaltelements ist ein Anfahrvorgang in allen niedrigen Vorwärtsgängen möglich. Für einen Anfahrvorgang im Rückwärtsgang ist das sechste Schaltelement als Reibschaltelement ausgebildet. Somit kann ein separates Anfahrelement entfallen. Ist das fünfte Schaltelement als ein kraftschlüssiges Reibschaltelement ausgebildet, so kann das fünfte Schaltelement sowohl zum Anfahren in Vorwärtsrichtung als auch zum Anfahren in Rückwärtsrichtung als Anfahrelement dienen.

Das Getriebe kann Bestandteil eines Antriebsstrangs eines Kraftfahrzeugs sein. Der Antriebsstrang weist neben dem Getriebe auch eine Verbrennungskraftmaschine auf, welche über einen Torsionsschwingungsdämpfer mit der Antriebswelle des Getriebes drehelastisch verbunden ist. Zwischen Antriebswelle und Verbrennungskraftmaschine kann sich die Trennkupplung befinden, welche Bestandteil des Getriebes sein kann. Die Abtriebswelle des Getriebes ist mit einem Achsgetriebe antriebswirkverbunden, welche mit Rädern des Kraftfahrzeugs verbunden ist. Weist das Getriebe die elektrische Maschine auf, so ermöglicht der Antriebsstrang mehrere Antriebsmodi des Kraftfahrzeugs. In einem elektrischen Fahrbetrieb wird das Kraftfahrzeug von der elektrischen Maschine des Getriebes angetrieben. In einem verbrennungsmotorischen Betrieb wird das Kraftfahrzeug von der Verbrennungskraftmaschine angetrieben. In einem hybridischen Betrieb wird das Kraftfahrzeug sowohl von der Verbrennungskraftmaschine als auch von der elektrischen Maschine des Getriebes angetrieben.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden. Eine ständig drehfeste Verbindung wird als Verbindung zwischen zwei Elementen bezeichnet, die stets besteht und deren verbundene Elemente somit stets die gleiche Drehzahl aufweisen.

Unter dem Begriff "Schließen eines Schaltelements" wird im Zusammenhang mit der Gangbildung ein Vorgang verstanden, bei dem das Schaltelement so angesteuert wird, dass es am Ende des Schließvorgangs ein hohes Maß an Drehmoment überträgt. Während formschlüssige Schaltelemente im "geschlossenen" Zustand keine Differenzdrehzahl zulassen, ist bei kraftschlüssigen Schaltelementen im "geschlossenen" Zustand die Ausbildung einer geringen Differenzdrehzahl zwischen den Schaltelementhälften gewollt oder ungewollt möglich.

Ausführungsbeispiele der Erfindung sind nachfolgend anhand der beigefügten Figuren detailliert beschrieben. Gleiche und vergleichbare Bauteile sind dabei mit gleichen Bezugszeichen versehen. Es zeigen:
Fig. 1 bis Fig. 9 je eine schematische Darstellung eines Getriebes gemäß ersten bis neunten Ausführungsbeispielen der Erfindung;
Fig. 10 ein Schaltschema für die Getriebe gemäß dem ersten bis neunten Ausführungsbeispiel;
Fig. 11 eine schematische Darstellung eines Getriebes gemäß einem zehnten Ausführungsbeispiel der Erfindung;
Fig. 12 ein Schaltschema für das Getriebe gemäß dem zehnten Ausführungsbeispiel;
Fig. 13 und Fig. 14 je eine schematische Darstellung eines Getriebes gemäß einem elften und zwölften Ausführungsbeispiel der Erfindung;
Fig. 15 ein Schaltschema für die Getriebe gemäß dem elften und zwölften Ausführungsbeispiel;
Fig. 16 bis Fig. 21 je eine schematische Darstellung eines Getriebes mit elektrischer Maschine gemäß dreizehnten bis siebzehnten Ausführungsbeispielen der Erfindung;
Fig. 22 und Fig. 23 ein Schaltschema für das Getriebe gemäß dem siebzehnten Ausführungsbeispiel;
Fig. 24 bis Fig. 27 je eine schematische Darstellung eines Getriebes gemäß einem achtzehnten bis einundzwanzigsten Ausführungsbeispiel der Erfindung;
Fig. 28 und Fig. 29 ein Schaltschema für die Getriebe gemäß dem zwanzigsten und einundzwanzigsten Ausführungsbeispiel; und
Fig. 30 eine schematische Darstellung einen Antriebsstrangs eines Kraftfahrzeugs.

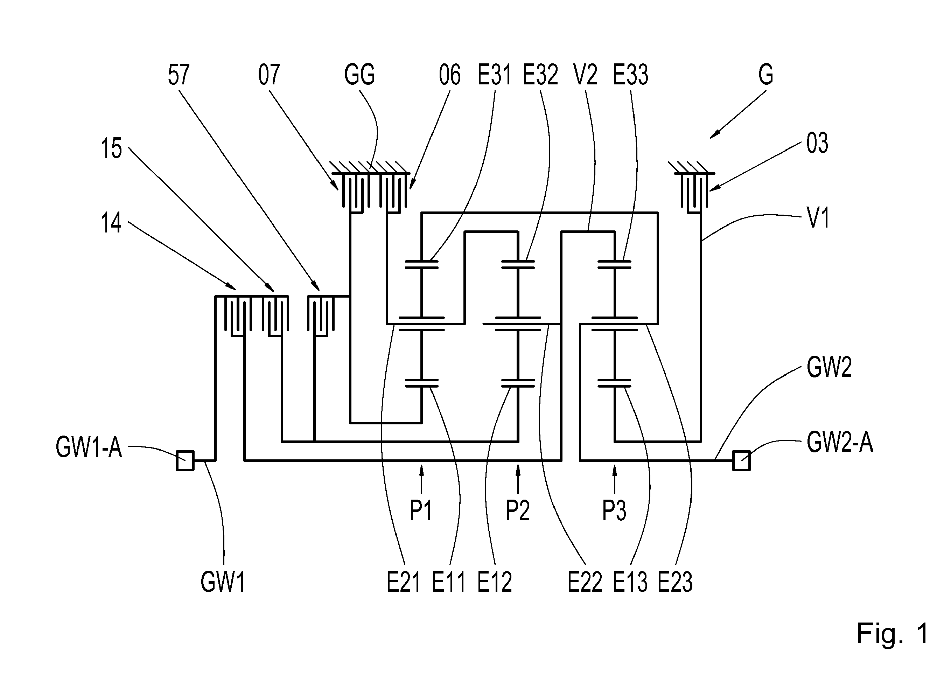

Fig. 1 zeigt schematisch ein Getriebe G entsprechend eines ersten Ausführungsbeispiels der Erfindung. Das Getriebe G weist einen ersten Planetenradsatz P1, einen zweiten Planetenradsatz P2 und einen dritten Planetenradsatz P3 auf. Jeder der drei Planetenradsätze P1, P2, P3 weist ein erstes Element E11, E12, E13, ein zweites Element E21, E22, E23 und ein drittes Element E31, E32, E33 auf. Das erste Element E11, E12, E13 ist stets durch ein Sonnenrad des jeweiligen Planetenradsatzes P1, P2, P3 gebildet. Ist der Planetenradsatz als ein Minus-Radsatz ausgebildet, so ist das zweite Element E21, E22, E23 durch einen Steg des jeweiligen Planetenradsatzes P1, P2, P3 gebildet und das dritte Element E31, E32, E33 durch das Hohlrad des jeweiligen Planetenradsatzes P1, P2, P3. In der in Fig. 1 dargestellten Ausführungsform des Getriebes G sind die Planetenradsätze P1, P2, P3 als Minus-Radsätze ausgebildet.

Das zweite Element E21 des ersten Planetenradsatzes P1 ist mit dem dritten Element E32 des zweiten Planetenradsatzes P2 ständig verbunden. Das zweite Element E22 des zweiten Planetenradsatzes P2 ist mit dem dritten Element E33 des dritten Planetenradsatzes P3 ständig verbunden. Das dritte Element E31 des ersten Planetenradsatzes P1 ist mit dem zweiten Element E23 des dritten Planetenradsatzes P3 ständig verbunden. Eine Abtriebswelle GW2 ist mit dem zweiten Element E23 des dritten Planetenradsatzes P3 ständig verbunden.

Das Getriebe G weist ein erstes Schaltelement 03, ein zweites Schaltelement 06, ein drittes Schaltelement 07, ein viertes Schaltelement 14, ein fünftes Schaltelement 15 und ein sechstes Schaltelement 57 auf. Durch Schließen des ersten Schaltelements 03 wird das erste Element E13 des dritten Planetenradsatzes P3 drehfest festgesetzt. Durch Schließen des zweiten Schaltelements 06 wird das zweite Element E21 des ersten Planetenradsatzes P1 drehfest festgesetzt. Durch Schließen des dritten Schaltelements 07 wird das erste Element E11 des ersten Planetenradsatzes P1 drehfest festgesetzt. Durch Schließen des vierten Schaltelements 14 wird eine Antriebswelle GW1 mit dem zweiten Element E22 des zweiten Planetenradsatzes P2 verbunden. Durch Schließen des fünften Schaltelements 15 wird die Antriebswelle GW1 mit dem ersten Element E12 des zweiten Planetenradsatzes P2 verbunden. Durch Schließen des sechsten Schaltelements 57 wird das erste Element E12 des zweiten Planetenradsatzes P2 mit dem ersten Element E11 des ersten Planetenradsatzes P1 verbunden.

Das Getriebe G weist eine Vielzahl von Koppelungen auf, darunter eine erste Koppelung V1 und eine zweite Koppelung V2. Die erste Koppelung V1 besteht zwischen dem ersten Element E13 des dritten Planetenradsatzes P3 und einem drehfesten Bauelement GG des Getriebes G, beispielsweise dem Getriebegehäuse. Die zweite Koppelung V2 besteht zwischen dem zweiten Element E22 des zweiten Planetenradsatzes P2 und dem dritten Element E33 des dritten Planetenradsatzes P3. Eine dieser beiden Koppelungen V1, V2 ist stets durch eine ständig drehfeste Verbindung gebildet, im konkreten Ausführungsbeispiel die zweite Koppelung V2. Die andere Koppelung, im gegebenen Ausführungsbeispiel die erste Koppelung V1, ist durch eine mittels des ersten Schaltelements 03 schaltbare Verbindung ausgebildet.

Die Planetenradsätze P1, P2, P3 sind in folgender axialen Reihenfolge hintereinander angeordnet: Erster Planetenradsatz P1, zweiter Planetenradsatz P2, dritter Planetenradsatz P3. Die drei Planetenradsätze P1, P2, P3 sind axial unmittelbar nebeneinander angeordnet, so dass keines der sechs Schaltelemente 03, 06, 07, 14, 15, 57 zwischen den drei Planetenradsätzen P1, P2, P3, angeordnet ist. Dadurch ergibt sich ein axial kompakter Aufbau. Die sechs Schaltelemente 03, 06, 07, 14, 15, 57 sind von außen gut zugänglich, wodurch die Betätigung dieser Schaltelemente vereinfacht wird. Äußere Schnittstellen GW1-A, GW2-A der Antriebswelle GW1 und der Abtriebswelle GW2 sind koaxial zueinander und an gegenüberliegenden Enden des Getriebes G angeordnet. Somit ist das Getriebe G für die Anwendung in einem Fahrzeugantriebsstrang geeignet, welcher parallel zur Fahrtrichtung des Kraftfahrzeugs ausgerichtet ist. Über die äußere Schnittstelle GW1-A kann die Antriebswelle GW1 mit einer getriebeexternen Antriebseinheit verbunden sein oder verbunden werden. In dieser Verbindung kann sich ein Anfahrelement befinden, beispielsweise ein hydrodynamischer Drehmomentwandler oder eine Reibkupplung. Ein solches Anfahrelement kann auch Bestandteil des Getriebes G sein. Über die äußere Schnittstelle GW2-A kann die Abtriebswelle GW2 mit einem nicht dargestellten Achsgetriebe AG verbunden werden, welches Teil des Getriebes G sein kann oder auch getriebeextern angeordnet sein kann.

Das Getriebe G gemäß dem ersten Ausführungsbeispiel weist drei als Bremsen ausgebildete Schaltelemente 03, 06, 07 sowie drei als Kupplungen ausgebildete Schaltelemente 14, 15, 57 auf. Diese hohe Anzahl an als Bremsen ausgebildete Schaltelemente vereinfacht den Aufbau des Getriebes G, da Bremsen aufgrund ihrer gehäusenahen Anordnung einfach zu betätigen sind. Im Getriebe G gemäß dem ersten Ausführungsbeispiel sind die drei als Bremsen ausgebildeten Schaltelemente 03, 06, 07 axial außerhalb der drei Planetenradsätze P1, P2, P3 angeordnet. Eine solche Anordnung begünstigt einen radial kompakten Aufbau des Getriebes G. Die drei als Bremsen ausgebildeten Schaltelemente 03, 06, 07 können alternativ dazu auch radial außerhalb der drei Planetenradsätze P1, P2, P3 angeordnet werden. Durch eine solche Anordnung wird ein axial besonders kompaktes Getriebe G erzielt.

Jedes der sechs Schaltelemente 03, 06, 07, 14, 15, 57 kann als formschlüssiges Schaltelement oder als kraftschlüssiges Schaltelement ausgebildet sein. Dies gilt für sämtliche Ausführungsbeispiele. Im in Fig. 1 dargestellten ersten Ausführungsbeispiel sind sämtliche dieser Schaltelemente schematisch als kraftschlüssige Schaltelemente dargestellt. Ausgehend von der äußeren Schnittstelle GW-1 der Antriebswelle GW1 sind folgende Schaltelemente im Wesentlichen axial nebeneinander in folgender Reihenfolge angeordnet: viertes Schaltelement 14, fünfte Schaltelement 15, sechstes Schaltelement 57, drittes Schaltelement 07, zweites Schaltelement 06. Diese Anordnung ist lediglich beispielhaft anzusehen, und kann bei Bedarf verändert werden. Beispielsweise kann das zweite Schaltelement 06 zumindest abschnittsweise radial innerhalb des dritten Schaltelements 07 angeordnet sein, oder umgekehrt. Das fünfte Schaltelement 15 kann radial außerhalb des vierten Schaltelements 14 angeordnet sein. Das sechste Schaltelement 57 kann radial innerhalb des dritten Schaltelements 07 angeordnet sein. Der Fachmann wird abhängig von äußeren Randbedingungen eine entsprechende Auswahl der möglichen Anordnungen der sechs Schaltelemente treffen.

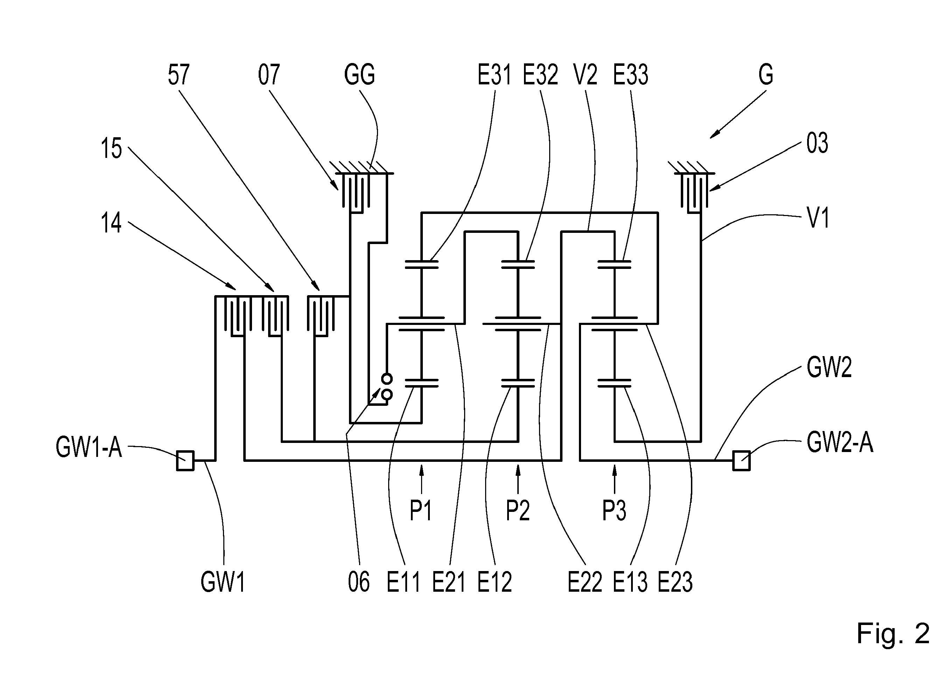

Fig. 2 zeigt schematisch ein Getriebe G entsprechend eines zweiten Ausführungsbeispiels der Erfindung, welches im Wesentlichen dem in Fig. 1 dargestellten ersten Ausführungsbeispiel entspricht. Lediglich Art und Lage des zweiten Schaltelements 06 wurde verändert, indem das zweite Schaltelement 06 nun als formschlüssiges Schaltelement ausgebildet ist, welches nun radial nahe zur Hauptdrehachse des Getriebes G angeordnet ist. Die übrigen Schaltelemente sind weiterhin als kraftschlüssige Schaltelemente ausgebildet.

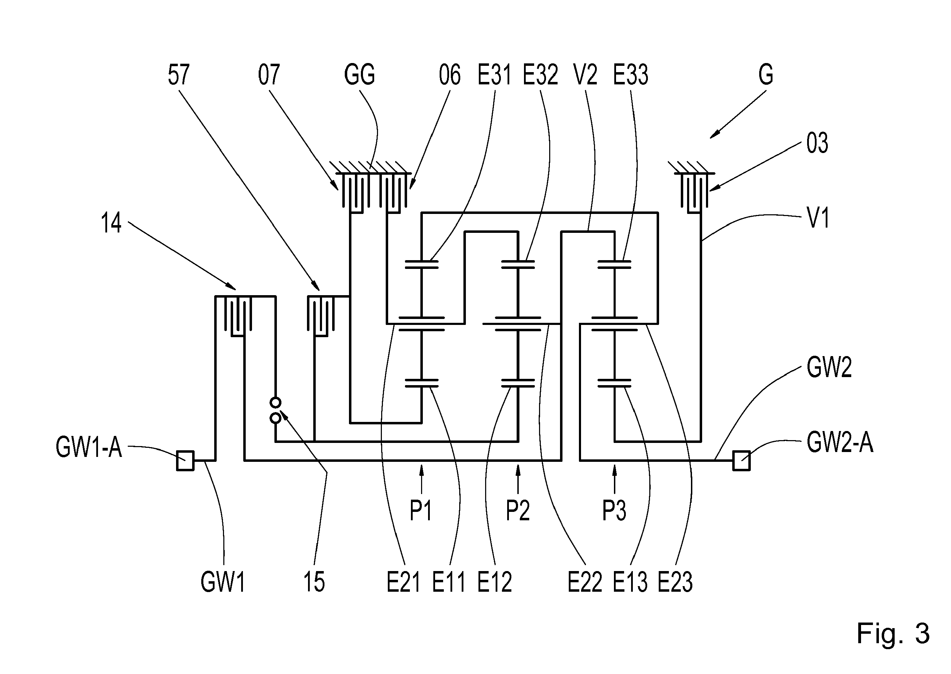

Fig. 3 zeigt schematisch ein Getriebe G entsprechend eines dritten Ausführungsbeispiels der Erfindung, welches im Wesentlichen dem in Fig. 1 dargestellten ersten Ausführungsbeispiel entspricht. Lediglich Art und Lage des fünften Schaltelementes 15 wurde verändert, so dass das fünfte Schaltelement 15 nun als formschlüssiges Schaltelement ausgebildet ist, welches radial nahe zu Hauptdrehachse des Getriebes G angeordnet ist. Die übrigen Schaltelemente sind weiterhin als kraftschlüssige Schaltelemente ausgebildet.

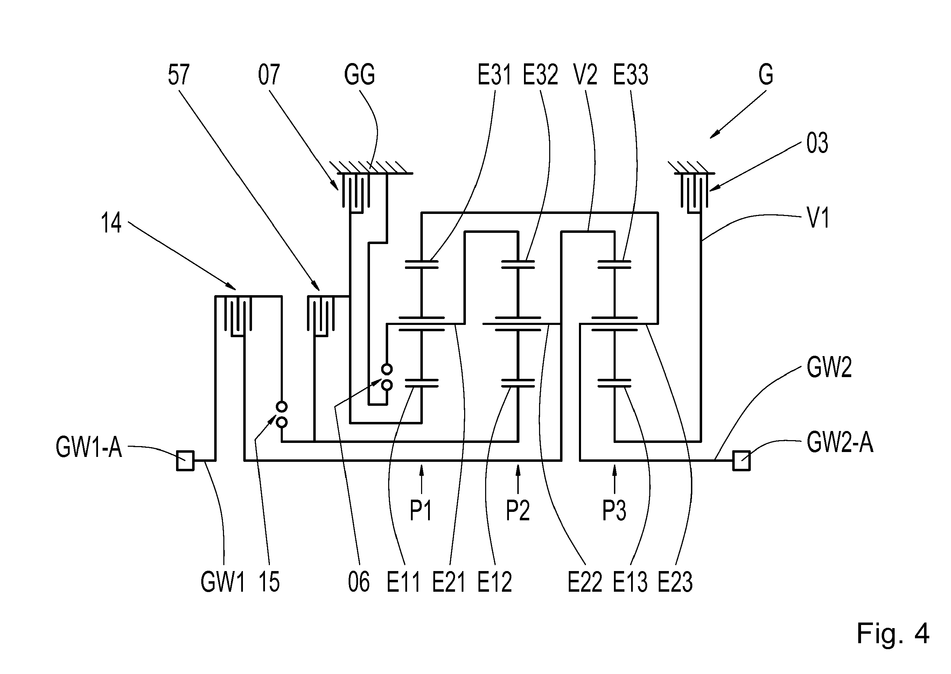

Fig. 4 zeigt schematisch ein Getriebe G entsprechend eines vierten Ausführungsbeispiels der Erfindung, welches einer Kombination aus dem zweiten und dritten Ausführungsbeispiel entspricht. Dementsprechend sind nun sowohl das zweite Schaltelement 06 als auch das fünfte Schaltelement 15 als formschlüssige Schaltelemente ausgebildet. Eine derartige Variation der Art und Lage des zweiten und fünften Schaltelements 06, 15 ist für sämtliche Ausführungsbeispiele möglich. Aus Gründen der Übersichtlichkeit sind diese Varianten in den nachfolgend dargestellten Ausführungsbeispielen nicht mehr explizit dargestellt.

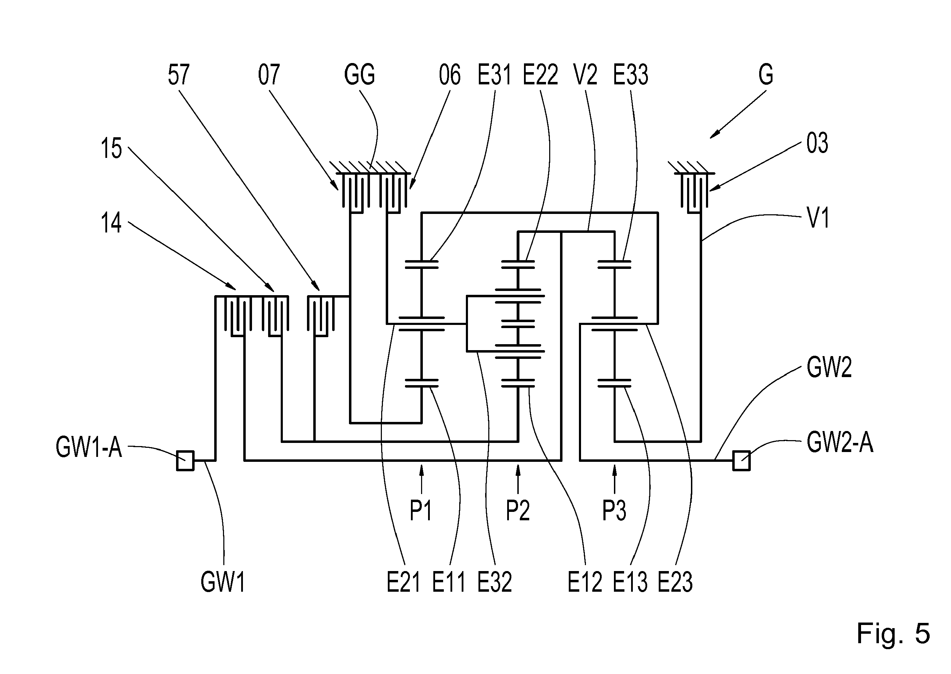

Fig. 5 zeigt schematisch ein Getriebe G entsprechend eines fünften Ausführungsbeispiels der Erfindung, welches im Wesentlichen dem in Fig. 1 dargestellten ersten Ausführungsbeispiel entspricht. Darin ist der zweite Planetenradsatz P2 anstatt als Minus-Radsatz nun als Plus-Radsatz ausgebildet. Dementsprechend ist der Steg des ersten Planetenradsatzes P1 nun mit dem Steg des zweiten Planetenradsatzes P2 verbunden und das Hohlrad des zweiten Planetenradsatzes P2 mit dem Hohlrad des dritten Planetenradsatzes P3. Durch Schließen des vierten Schaltelements 14 wird nun eine Verbindung zwischen der Antriebswelle GW1 und dem Hohlrad des zweiten Planetenradsatzes P2 hergestellt. Das Hohlrad des zweiten Planetenradsatzes P2 bildet nun dessen zweites Element E22 und der Steg des zweiten Planetenradsatzes P2 bildet nun dessen drittes Element E23. Eine solche Variation der Bauart des zweiten Planetenradsatzes P2 ist für sämtliche Ausführungsbeispiele anwendbar.

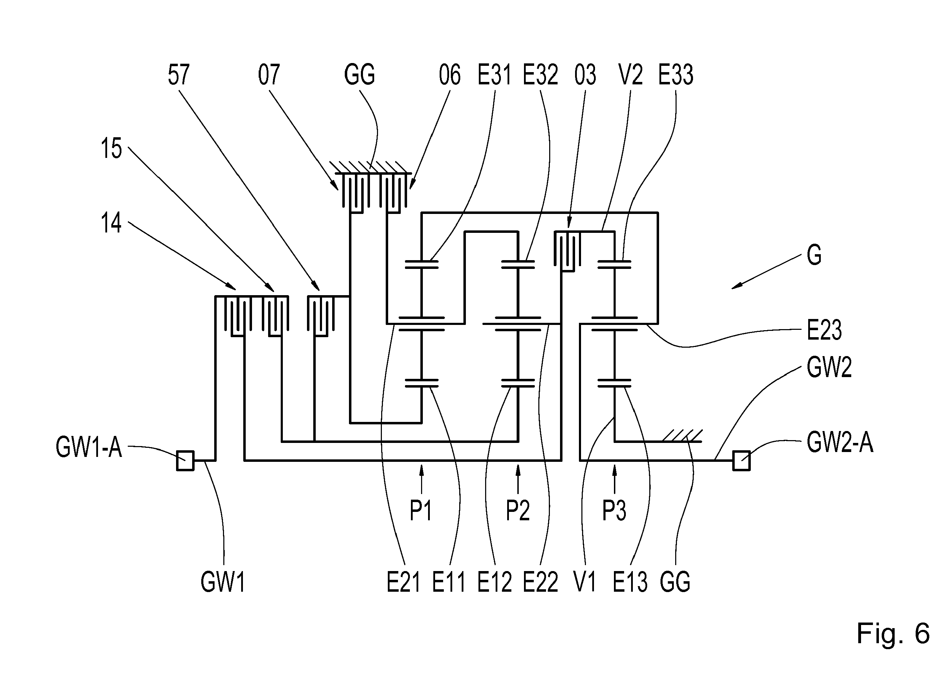

Fig. 6 zeigt schematisch ein Getriebe G entsprechend eines sechsten Ausführungsbeispiels der Erfindung, welches im Wesentlichen dem in Fig. 1 dargestellten ersten Ausführungsbeispiel entspricht. Darin ist die zweite Koppelung V2 nun durch eine schaltbare Verbindung dargestellt, indem das erste Schaltelement 03 in der Wirkverbindung zwischen dem zweiten Element E22 des zweiten Planetenradsatzes P2 und dem dritten Element E33 des dritten Planetenradsatzes P3 angeordnet ist. Das erste Schaltelement ist beispielhaft axial zwischen dem zweiten Planetenradsatz P2 und dem dritten Planetenradsatz P3 angeordnet. Das erste Element E13 des dritten Planetenradsatzes P3 ist dementsprechend ständig mit dem drehfesten Bauelement GG verbunden, wodurch in der ersten Koppelung V1 eine ständig drehfeste Verbindung besteht. Auch diese Variation ist für sämtliche Ausführungsbeispiele anwendbar.

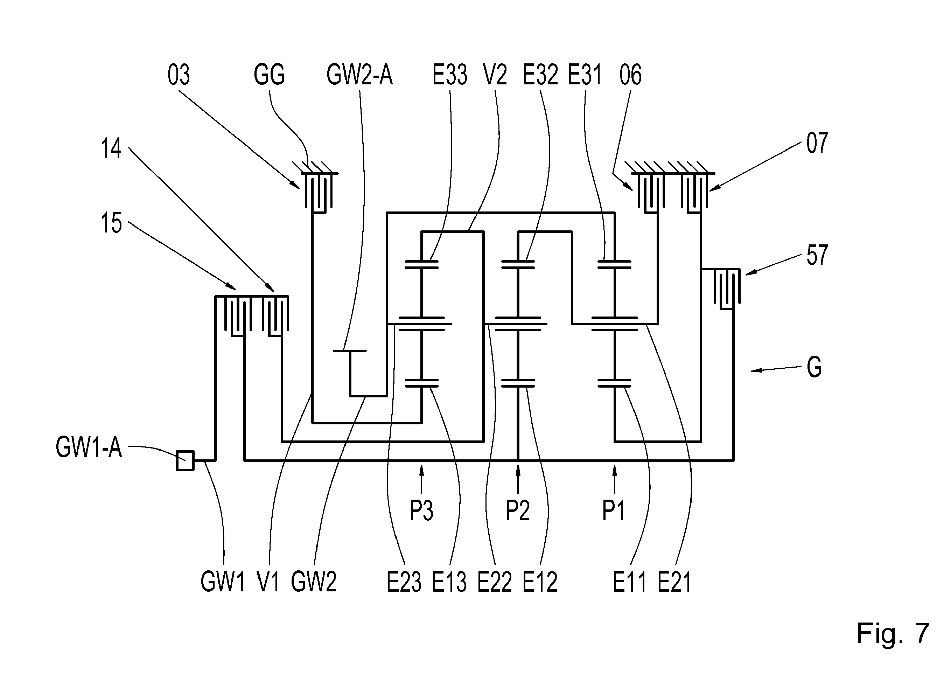

Fig. 7 zeigt schematisch ein Getriebe G entsprechend eines siebten Ausführungsbeispiels der Erfindung, welches im Wesentlichen dem in Fig. 1 dargestellten ersten Ausführungsbeispiel entspricht. Lediglich die räumliche Anordnung der drei Planetenradsätze P1, P2, P3 und der Schaltelemente 03, 06, 07, 14, 15, 57 wurde verändert. Ausgehend von jenem axialen Ende des Getriebes G, dem die äußere Schnittstelle GW1-A der Antriebswelle GW1 zugeordnet ist, sind die drei Planetenradsätze P1, P2, P3 in folgender axialen Reihenfolge hintereinander angeordnet: Dritter Planetenradsatz P3, zweiter Planetenradsatz P2, erster Planetenradsatz P1. Die äußeren Schnittstellen GW1-A, GW2-A der Antriebswelle GW1 und der Abtriebswelle GW2 sind nun im Bereich desselben axialen Endes des Getriebes G angeordnet. Die äußere Schnittstelle GW2-A der Abtriebswelle GW2 ist als eine Verzahnung ausgebildet, welche dazu eingerichtet ist mit einer zur Hauptachse des Getriebes G achsparallelen Welle mit entsprechender Verzahnung zu kämmen. Das Getriebe G gemäß dem siebten Ausführungsbeispiel ist daher für die Anwendung in einem Kraftfahrzeug geeignet, dessen Antriebsstrang quer zur Fahrtrichtung des Kraftfahrzeugs ausgerichtet ist. Das erste, vierte und fünfte Schaltelement 03, 14, 15 sind im Bereich der äußeren Schnittstelle GW1-A der Antriebswelle GW1 angeordnet. Das zweite, dritte und sechste Schaltelement 06, 07, 57 sind im Bereich jenes axialen Endes des Getriebes G angeordnet, welches der äußeren Schnittstelle GW1-A der Antriebswelle GW1 gegenüberliegt. Dies gilt für sämtliche Ausführungsformen mit einer solchen Anordnung der Planetenradsätze P1, P2, und P3 und äußeren Schnittstellen GW1-A, GW2-A der Antriebswelle GW1 und Abtriebswelle GW2, sofern die erste Koppelung V1 als eine schaltbare Verbindung ausgebildet ist.

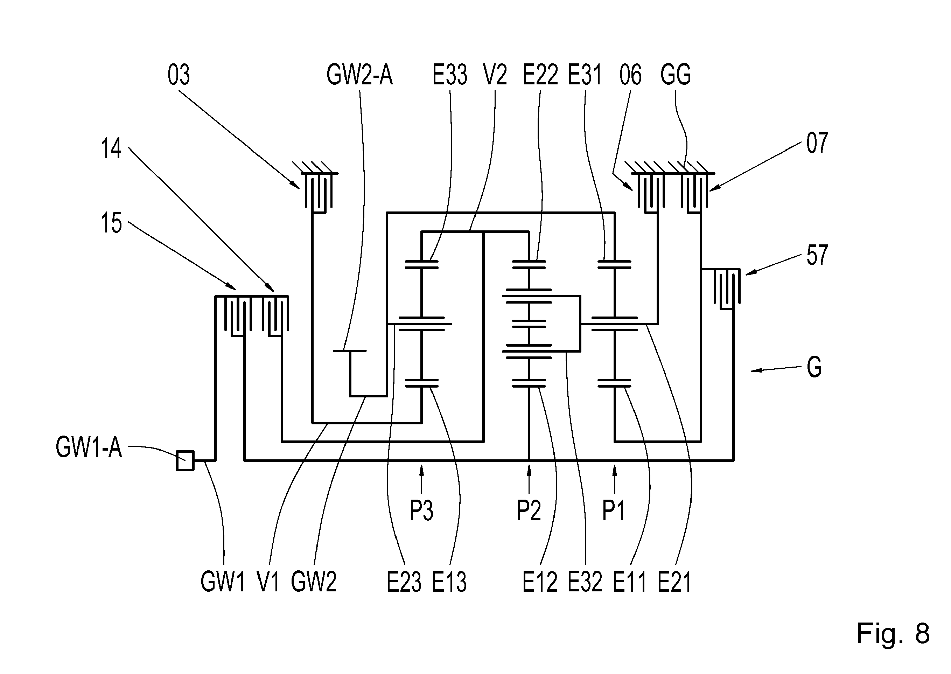

Fig. 8 zeigt schematisch ein Getriebe G entsprechend eines achten Ausführungsbeispiels der Erfindung, welches im Wesentlichen dem in Fig. 7 dargestellten siebten Ausführungsbeispiel entspricht. Lediglich die Art des zweiten Planetenradsatzes P2 wurde verändert, so dass der zweite Planetenradsatz P2 nun als Plus-Radsatz ausgebildet ist. Die Anbindungen an Steg und Hohlrad des zweiten Planetenradsatzes P2 wurden entsprechend verändert.

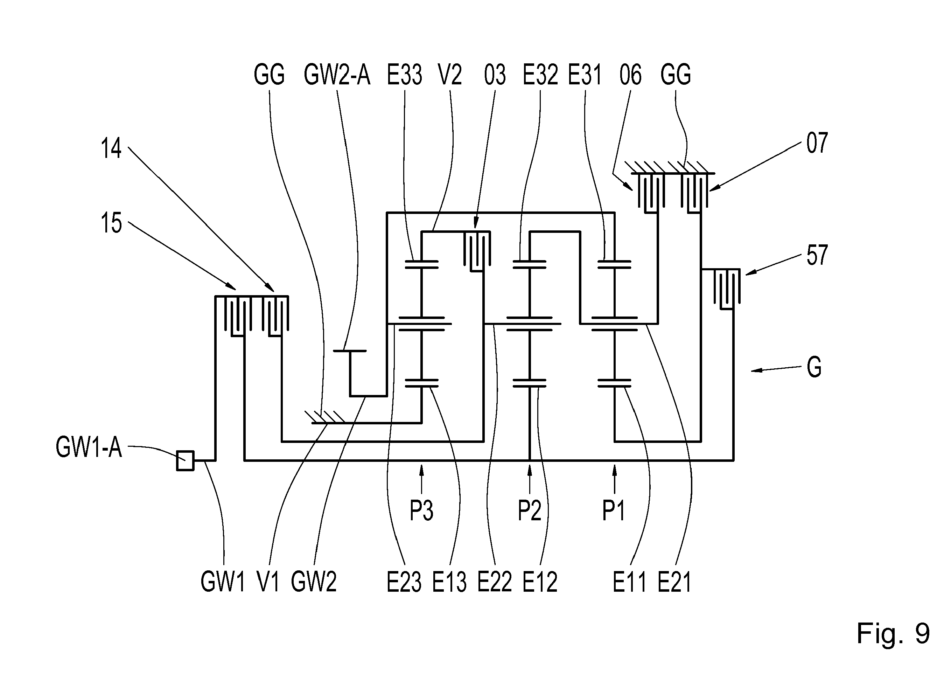

Fig. 9 zeigt schematisch ein Getriebe G entsprechend eines neunten Ausführungsbeispiels der Erfindung, welches im Wesentlichen dem in Fig. 7 dargestellten siebten Ausführungsbeispiel entspricht. Darin ist die zweite Koppelung V2 als eine schaltbare Verbindung ausgebildet, indem das erste Schaltelement 03 in der Wirkverbindung zwischen dem dritten Element E33 des dritten Planetenradsatzes P3 und dem zweiten Element E22 des zweiten Planetenradsatzes P2 angeordnet ist. Das erste Schaltelement 03 ist beispielhaft axial zwischen dem dritten Planetenradsatz P3 und dem zweiten Planetenradsatz P2 angeordnet. Die erste Koppelung V1 ist als eine ständig drehfeste Verbindung ausgebildet, indem das erste Element E13 des dritten Planetenradsatzes P3 mit dem drehfesten Bauelement GG ständig verbunden ist.

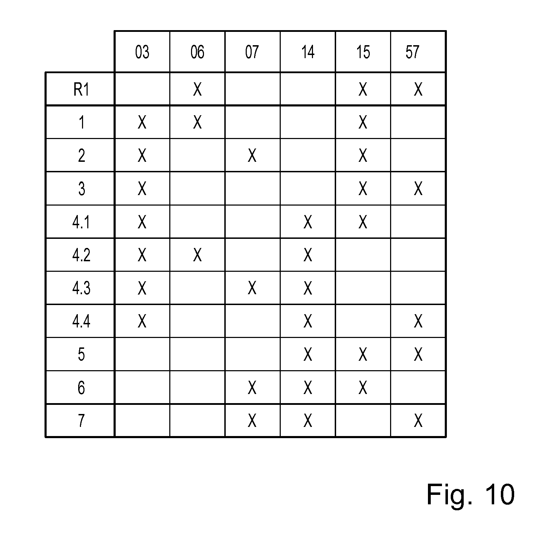

Fig. 10 zeigt ein Schaltschema, welches für die Getriebe G gemäß dem ersten bis neunten Ausführungsbeispiel anwendbar ist. In den Zeilen des Schaltschemas sind ein Rückwärtsgang R1 sowie ein erster bis siebter Vorwärtsgang 1 bis 7 angegeben.

Dabei sind insgesamt vier Varianten 4.1, 4.2, 4.3, 4.4 zur Bildung des vierten Vorwärtsganges 4 angegeben. In den Spalten des Schaltschemas ist durch ein X gekennzeichnet, welche der Schaltelemente 03, 06, 07, 14, 15, 57 in welchem Gang 1 bis 7, R1 geschlossen sind. Die Gänge beziehen sich dabei auf feste Übersetzungsverhältnisse zwischen der Antriebswelle GW1 und der Abtriebswelle GW2 des Getriebes G.

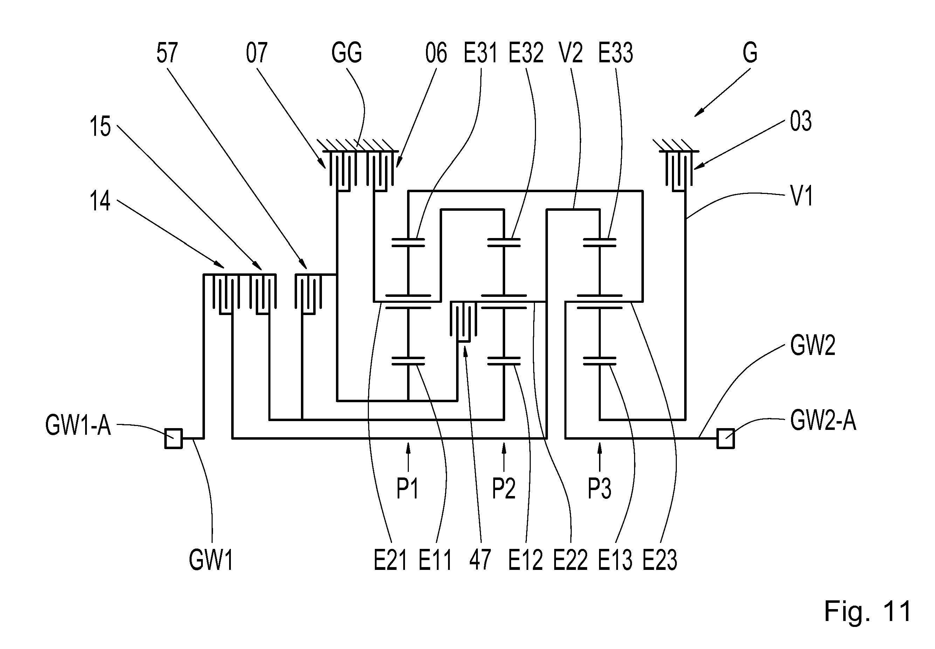

Fig. 11 zeigt schematisch ein Getriebe G entsprechend eines zehnten Ausführungsbeispiels der Erfindung. Im Unterschied zu dem in Fig. 1 dargestellten ersten Ausführungsbeispiel weist das Getriebe G nun ein siebtes Schaltelement 47 auf. Durch Schließen des siebten Schaltelementes 47 wird das erste Element E11 des ersten Planetenradsatzes P1 mit dem zweiten Element E22 des zweiten Planetenradsatzes P2 verbunden. Das siebte Schaltelement 47 ist beispielhaft axial zwischen dem ersten und dem zweiten Planetenradsatz P1, P2 angeordnet. Das siebte Schaltelement 47 ist vorzugsweise als kraftschlüssiges Schaltelement ausgebildet, kann jedoch auch als formschlüssiges Schaltelement ausgebildet sein.

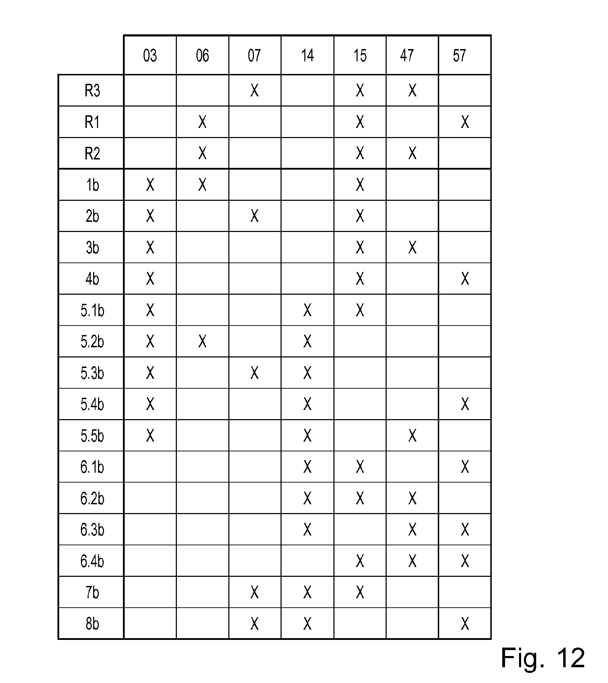

Fig. 12 zeigt ein Schaltschema für das Getriebe G gemäß dem zehnten Ausführungsbeispiel. Darin sind in den Zeilen des Schaltschemas neben dem Rückwärtsgang R1 ein zweiter Rückwärtsgang R2, ein dritter Rückwärtsgang R3 sowie ein erster bis achter Vorwärtsgang 1 b bis 8b angegeben. In den Spalten des Schaltschemas ist durch ein X gekennzeichnet, welche der Schaltelemente 03, 06, 07, 14, 15, 57, 47 in welchem der Rückwärtsgänge R1, R2, R3 beziehungsweise Vorwärtsgängen 1 b bis 8b geschlossen sind. Zur Bildung des fünften Vorwärtsganges sind insgesamt fünf Varianten 5.1 b, 5.2b, 5.3b, 5.4b, 5.5b verfügbar. Zur Bildung des sechsten Vorwärtsgangs sind insgesamt vier Varianten 6.1 b, 6.2b, 6.3b, 6.4b verfügbar. Durch das siebte Schaltelement 47 wird das Getriebe G somit auf ein Getriebe mit acht Vorwärtsgängen 1 b bis 8b zwischen der Antriebswelle GW1 und der Abtriebswelle GW2 erweitert.

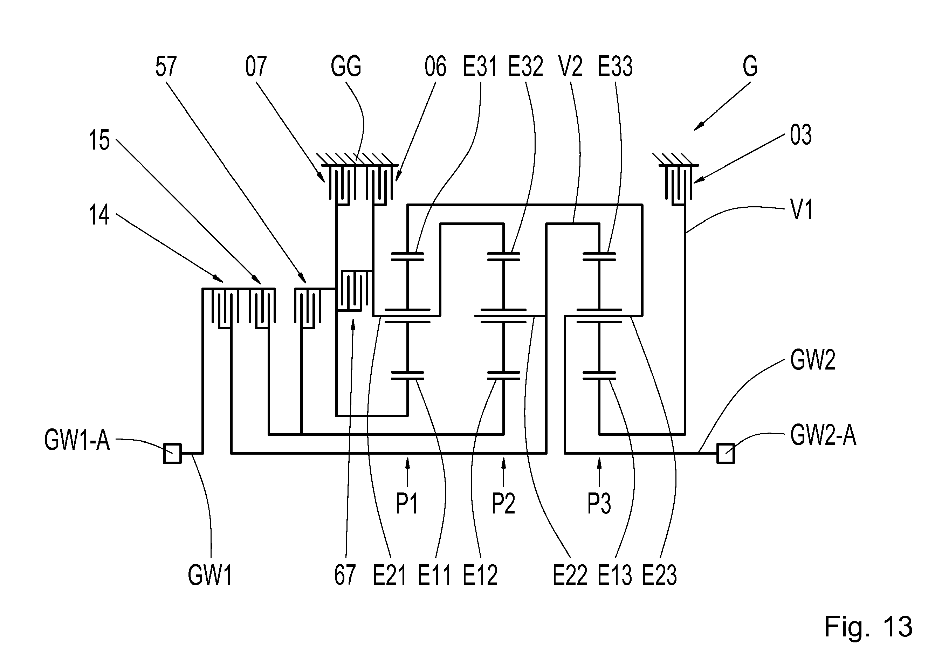

Fig. 13 zeigt schematisch ein Getriebe G entsprechend eines elften Ausführungsbeispiels der Erfindung. Im Unterschied zu dem in Fig. 1 dargestellten ersten Ausführungsbeispiel weist das Getriebe G gemäß dem elften Ausführungsbeispiel sieben Schaltelemente auf. Das siebte Schaltelement 67 ist dabei dazu eingerichtet, das erste Element E11 des ersten Planetenradsatzes P1 mit dem zweiten Element E21 der ersten Planetenradsatzes P1 zu verbinden. Beispielhaft ist das siebte Schaltelement 67 abschnittsweise radial innerhalb des dritten Schaltelements 06 angeordnet. Durch Schließen des siebten Schaltelements 67 wird daher der erste Planetenradsatz P1 verblockt, so dass seine Elemente E11, E21, E31 die gleiche Drehzahl aufweisen.

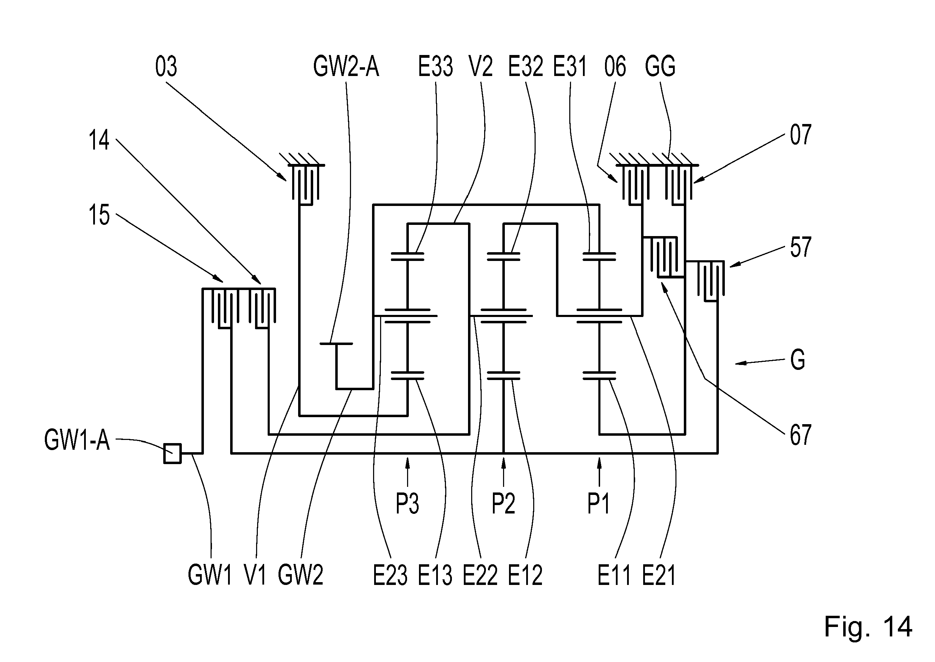

Fig. 14 zeigt schematisch ein Getriebe G entsprechend eines zwölften Ausführungsbeispiels der Erfindung, welches im Wesentlichen dem elften Ausführungsbeispiel entspricht. Lediglich die Anordnung der einzelnen Getriebeelemente wurde verändert, so dass das Getriebe G nun für die Anwendung in einem quer zur Fahrtrichtung des Fahrzeugs ausgerichteten Antriebstranges geeignet ist.

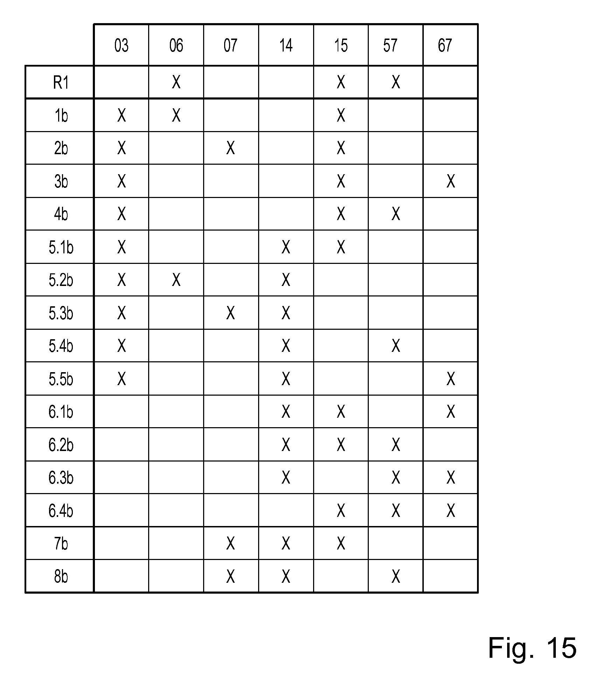

Fig. 15 zeigt ein Schaltschema für die Getriebe G gemäß dem elften und zwölften Ausführungsbeispiel. In den Zeilen des Schaltschemas sind der Rückwärtsgang R1 sowie der erste bis achte Vorwärtsgang 1 b bis 8b angegeben. In den Spalten des Schaltschemas ist durch ein X gekennzeichnet, welche der Schaltelemente 03, 06, 07, 14, 15, 57, 67 in welchem Gang R1, 1b bis 8b geschlossen sind. Die Bildung der Vorwärtsgänge 1 b bis 8b mit dem als 67 bezeichneten siebten Schaltelement ist identisch zu der Gangbildung mit dem als 47 bezeichneten siebten Schaltelement. Durch das siebte Schaltelement 67 ist es daher in gleicher Weise möglich, einen zusätzlichen Vorwärtsgang zwischen der Antriebswelle GW1 und der Abtriebswelle GW2 zur Verfügung zu stellen.

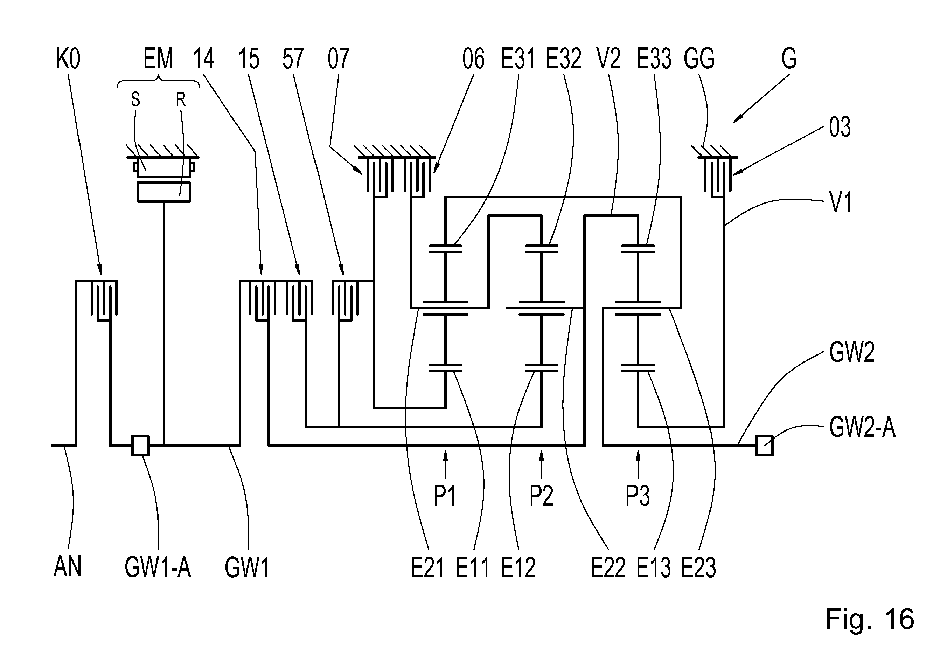

Fig. 16 zeigt schematisch ein Getriebe G entsprechend eines dreizehnten Ausführungsbeispiels der Erfindung, welches im Wesentlichen dem in Fig. 1 dargestellten ersten Ausführungsbeispiel entspricht. Das Getriebe G weist nun eine elektrische Maschine EM auf, welche einen drehfesten Stator S und einen drehbaren Rotor R umfasst. Der Rotor R ist dabei ständig mit der Antriebswelle GW1 verbunden. Darüber hinaus weist das Getriebe G eine Anschlusswelle AN auf, welche über eine Trennkupplung K0 mit der Antriebswelle GW1 verbindbar ist. Die elektrische Maschine EM ist dazu eingerichtet, Leistung auf die Antriebswelle GW1 aufzubringen, oder von dieser Leistung aufzunehmen. Bei Verwendung des Getriebes G im Kraftfahrzeugantriebsstrang ist das Getriebe G mittels der elektrischen Maschine EM dazu eingerichtet, das Fahrzeug anzutreiben oder generatorisch abzubremsen.

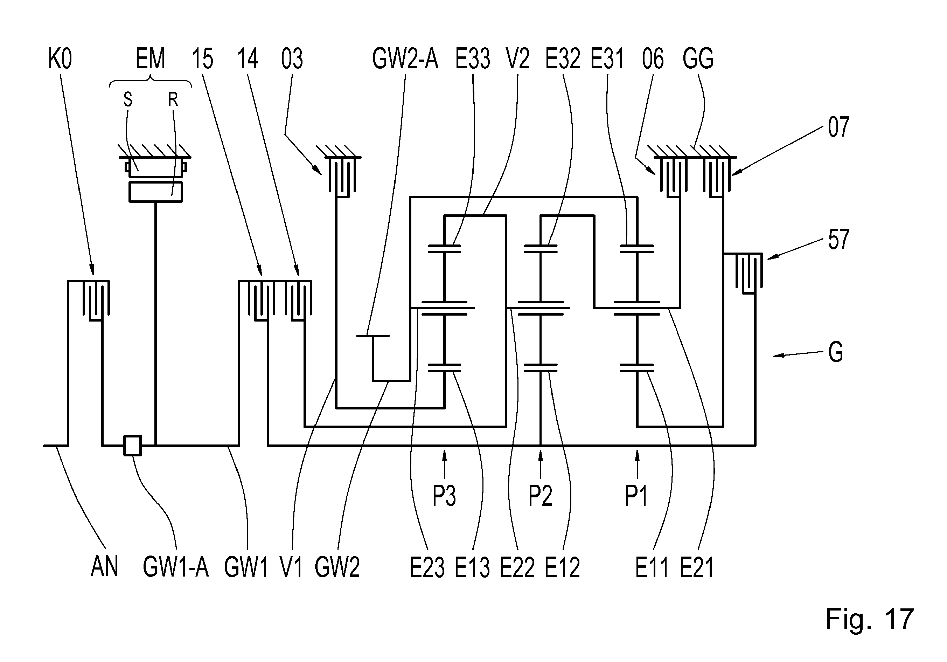

Fig. 17 zeigt schematisch ein Getriebe G entsprechend eines vierzehnten Ausführungsbeispiels der Erfindung, welches im Wesentlichen dem dreizehnten Ausführungsbeispiel entspricht. Lediglich die Anordnung der Getriebekomponenten wurde verändert, so dass die äußere Schnittstelle GW2-A der Abtriebswelle GW2 nun im Bereich desselben axialen Endes des Getriebes G wie die äußere Schnittstelle GW1-A der Antriebswelle GW1 angeordnet ist.

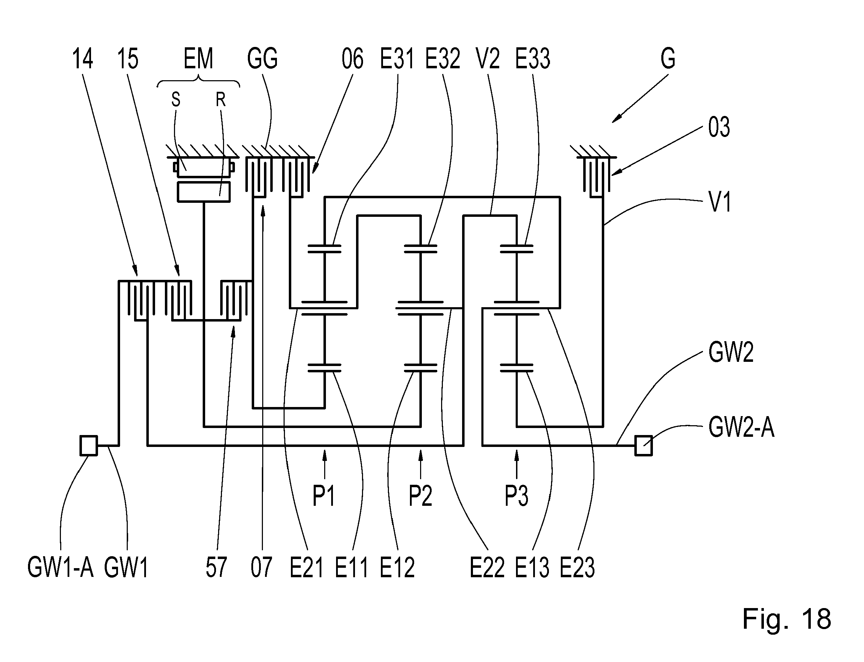

Fig. 18 zeigt schematisch ein Getriebe G entsprechend eines fünfzehnten Ausführungsbeispiels der Erfindung. Der Rotor R der elektrischen Maschine EM ist nun an dem ersten Element E12 des zweiten Planetenradsatzes P2 angebunden. Die Anschlusswelle AN sowie die Trennkupplung K0 entfallen. Durch eine solche Anbindung der elektrischen Maschine EM ist neben verschiedenen elektrisch antreibbaren Fahrgängen auch ein stufenloser Betrieb des Getriebes G möglich. Für einen solchen stufenlosen Betrieb ist das vierte Schaltelement 14 zu schließen, so dass Drehmoment von der getriebeexternen Antriebsquelle über das geschlossene vierte Schaltelement 14 auf das zweite Element E22 des zweiten Planetenradsatzes P2 wirkt. Die elektrische Maschine EM wirkt auf das erste Element E12 des zweiten Planetenradsatzes P2. Bei vorgegebener Drehzahl der Antriebswelle GW1 und Vorgabe der Drehzahl des Rotors R ist die Drehzahl des dritten Elements E32 des zweiten Planetenradsatzes P2 festgelegt. Durch Schließen des dritten Schaltelementes 07 oder des sechsten Schaltelementes 57 erfolgt eine Drehmomentübertragung ausgehend vom dritten Element E23 des zweiten Planetenradsatzes P2 über den ersten Planetenradsatz P1 zur Abtriebswelle GW2.

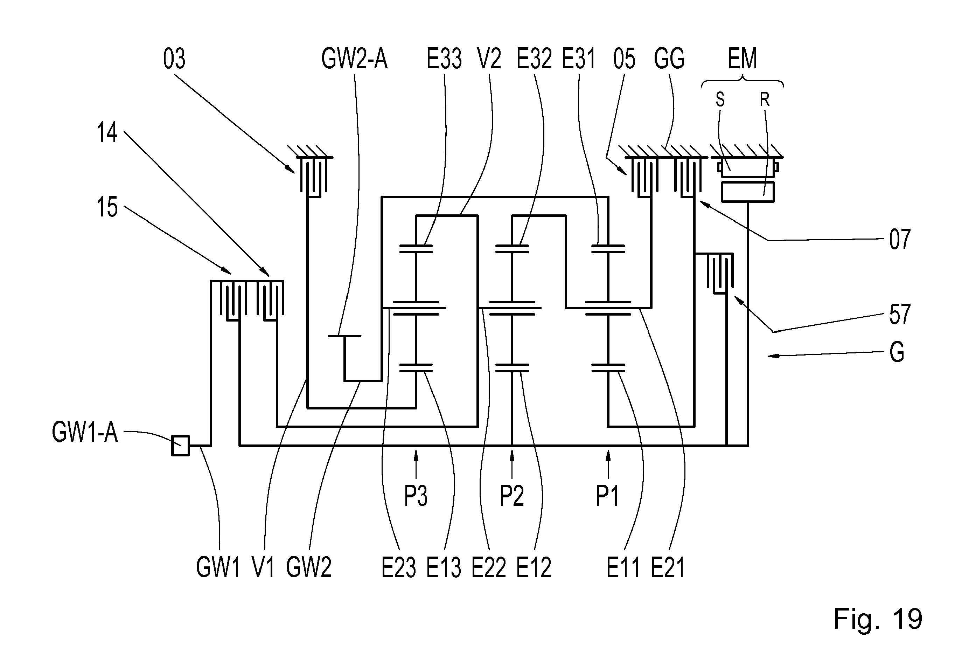

Fig. 19 zeigt schematisch ein Getriebe G entsprechend eines sechzehnten Ausführungsbeispiels der Erfindung, welches im Wesentlichen dem fünfzehnten Ausführungsbeispiel entspricht. Lediglich die geometrische Anordnung der Getriebekomponenten wurde verändert, so dass die äußere Schnittstelle GW2-A der Abtriebswelle GW2 nun im Bereich desselben axialen Endes des Getriebes G wie die äußere Schnittstelle GW1-A der Antriebswelle GW1 angeordnet ist. Die elektrische Maschine EM ist aufgrund ihrer Anbindung an das erste Element E12 des zweiten Planetenradsatzes P2 am gegenüberliegenden axialen Ende des Getriebes G wie die äußere Schnittstelle GW1-A der Antriebswelle GW1 angeordnet.

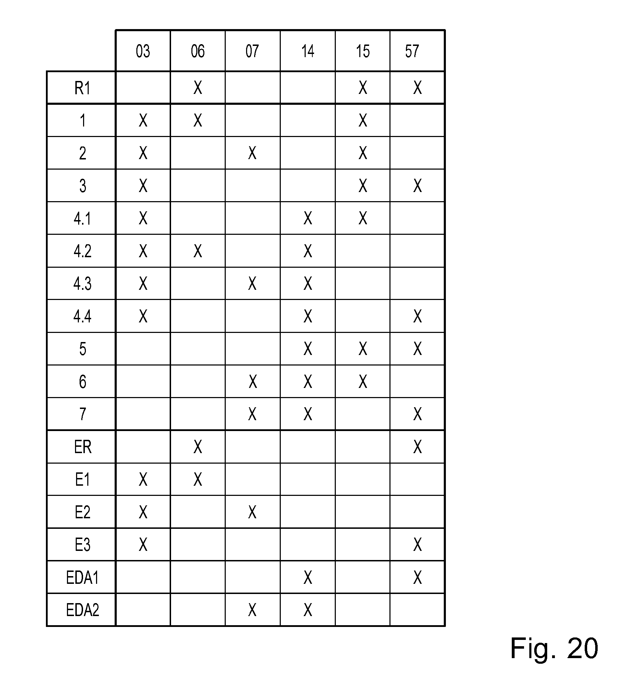

Fig. 20 zeigt ein Schaltschema für die Getriebe G gemäß dem fünfzehnten und sechzehnten Ausführungsbeispiel. In den Zeilen des Schaltschemas sind der Rückwärtsgang R1 und die sieben Vorwärtsgänge 1 bis 7 zwischen der Antriebswelle GW1 und der Abtriebswelle GW2 angegeben. Die Bildung des Rückwärtsganges R1 und der sieben Vorwärtsgänge 1 bis 7 entspricht der Gangbildung in den vorangegangenen Ausführungsbeispielen zu den Getrieben G mit sechs Schaltelementen. Darüber hinaus ist in den Zeilen des Schaltschemas ein elektrisch antreibbarer Rückwärtsgang ER, ein ersten bis dritter elektrisch antreibbarer Vorwärtsgang E1 bis E3 sowie ein erster Überlagerungs-Betriebsmodus EDA1 und ein zweiter ÜberlagerungsBetriebsmodus EDA2 angegeben. In den Spalten des Schaltschemas ist durch ein X gekennzeichnet, welche der Schaltelemente 03, 06, 07, 14, 15, 57 in welchem Gang, beziehungsweise Betriebsmodus geschlossen sind. Der elektrisch antreibbare Rückwärtsgang ER und die elektrisch antreibbaren Vorwärtsgänge E1 bis E3 beziehen sich auf feste Übersetzungsverhältnisse zwischen dem ersten Element E12 des zweiten Planetenradsatzes P2 und der Abtriebswelle GW2. In diesen elektrisch antreibbaren Gängen ER, E1, E2, E3 erfolgt dabei keine Drehmomentübertragung zur Antriebswelle GW1, da das vierte und fünfte Schaltelement 14, 15 geöffnet sind. Eine getriebeexterne Antriebseinheit, welche mit der Antriebswelle GW1 verbunden ist, wird somit in den elektrischen Gängen ER, E1, E2, E3 nicht mitgeschleppt. Die Überlagerungs-Betriebsmodi EDA1, EDA2 beziehen sich auf stufenlose Betriebsmodi des Getriebes G. Bei vorgegebener Drehzahl der Antriebswelle GW1 und Vorgabe der Drehzahl des Rotors R ist in den Überlagerungs-Betriebsmodi EDA1, EDA2 ein stufenloser Betrieb des Getriebes G möglich. In den Überlagerungs-Betriebsmodi EDA1, EDA2 kann somit beispielsweise ein Anfahrvorgang eines Kraftfahrzeugs mit dem Getriebe G dargestellt werden.

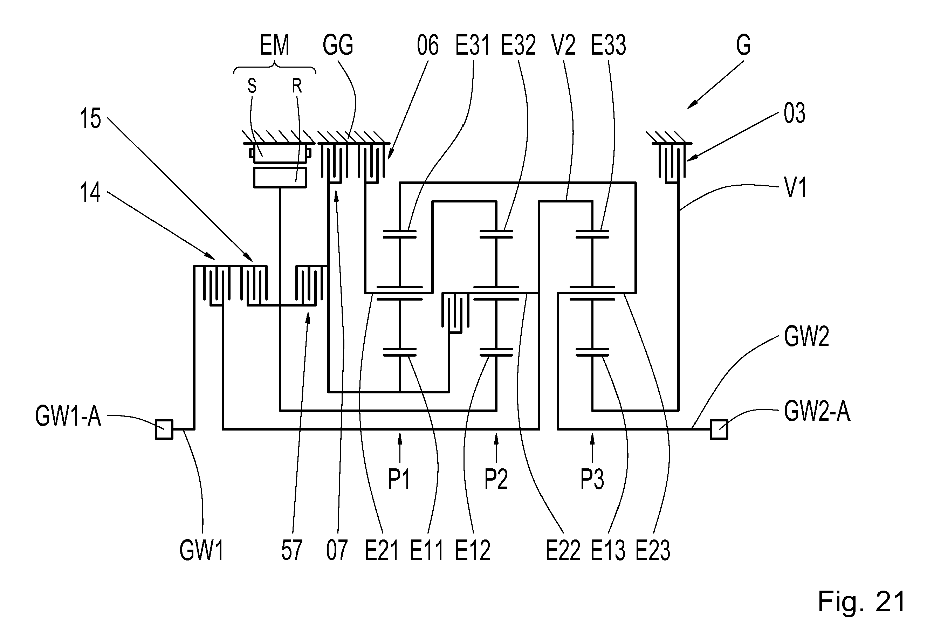

Fig. 21 zeigt schematisch ein Getriebe G entsprechend eines siebzehnten Ausführungsbeispiels der Erfindung. Dieses entspricht im Wesentlichen dem in Fig. 11 dargestellten zehnten Ausführungsbeispiel, welches das siebente Schaltelement 47 umfasst, ergänzt um eine an dem ersten Element E12 des zweiten Planetenradsatzes P2 angebundene elektrische Maschine EM.

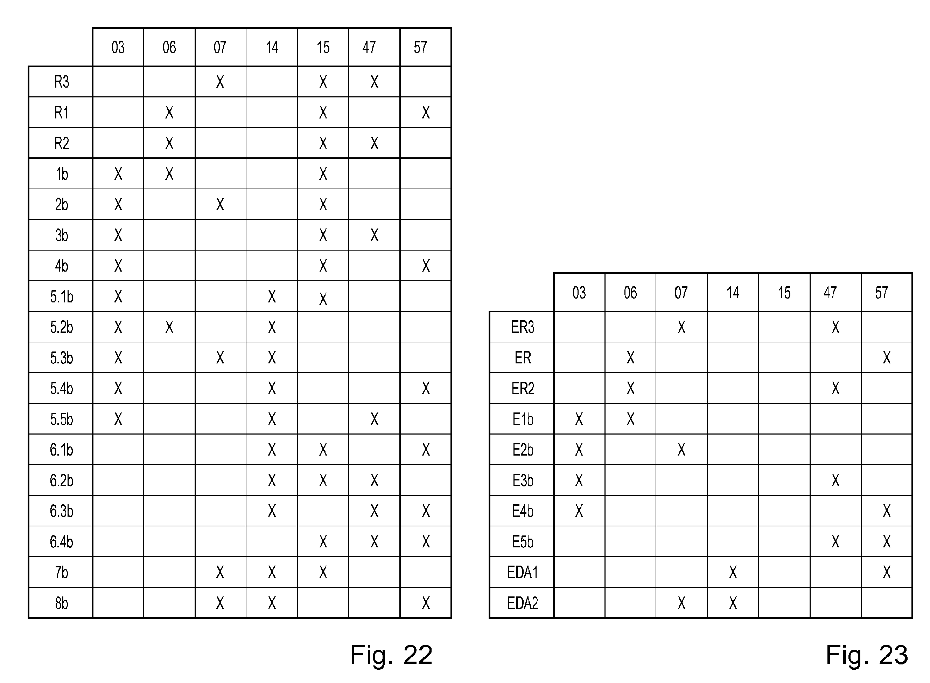

Fig. 22 zeigt ein Schaltschema für das Getriebe G gemäß dem siebzehnten Ausführungsbeispiel, wobei die Bildung der Rückwärtsgänge R1 bis R3 und Vorwärtsgänge 1 b bis 8b zwischen den Antriebswelle GW1 und der Abtriebswelle GW2 dargestellt ist.

Fig. 23 zeigt ein Schaltschema für das Getriebe G gemäß dem siebzehnten Ausführungsbeispiel, wobei in den Zeilen des Schaltschemas drei elektrisch antreibbare Rückwärtsgänge ER, ER2, ER3, fünf elektrisch antreibbare Vorwärtsgänge E1 b bis E5b, sowie die zwei Überlagerungs-Betriebsmodi EDA1, EDA2 angegeben sind. In den Spalten der Schaltschemas ist durch ein X gekennzeichnet, welche der Schaltelemente 03, 06, 07, 14, 15, 57, 47 in welchem elektrisch antreibbaren Gang ER, ER2, ER3, E1 b bis E5b, und Überlagerungs-Betriebsmodi EDA1, EDA2 geschlossen sind. Durch das siebte Schaltelement 47 ist die Bildung zweier weiterer elektrisch antreibbarer Rückwärtsgänge ER2, ER3 möglich. Darüber hinaus ist durch das siebte Schaltelement 47 die Bildung von zwei weiteren elektrisch antreibbaren Vorwärtsgängen E3b, E5b möglich. Die elektrisch antreibbaren Gänge beziehen sich dabei auf feste Übersetzungsverhältnisse zwischen dem ersten Element E12 des zweiten Planetenradsatzes P2 und der Abtriebswelle GW2.

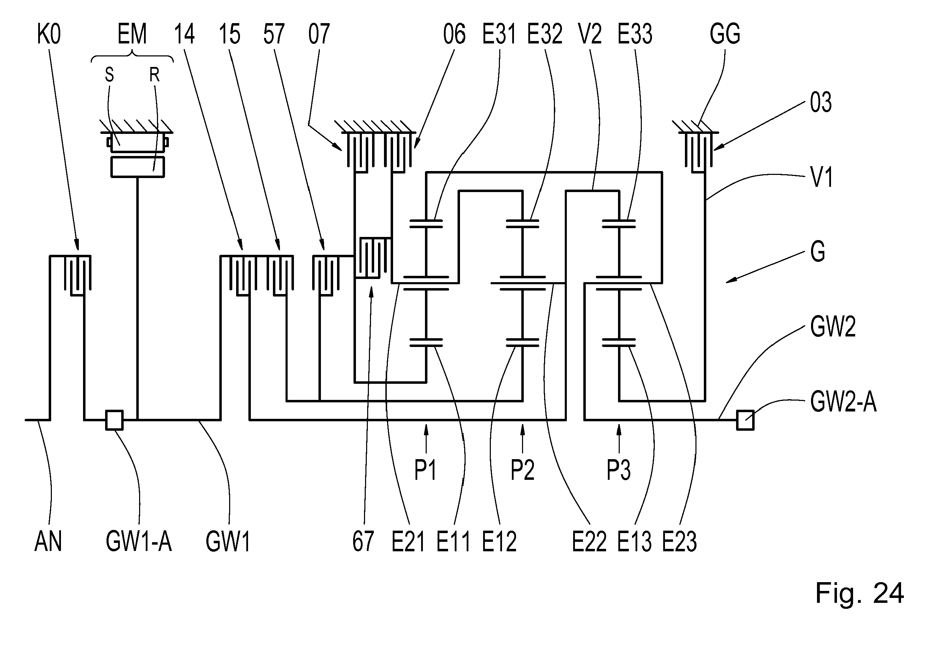

Fig. 24 zeigt schematisch ein Getriebe G entsprechend eines achtzehnten Ausführungsbeispiels der Erfindung, welches im Wesentlichen dem in Fig. 13 dargestellten elften Ausführungsbeispiel entspricht und somit das siebente Schaltelement 67 umfasst. Darüber hinaus umfasst das Getriebe G eine elektrische Maschine EM, deren Rotor R mit der Antriebswelle GW1 ständig verbunden ist. Darüber hinaus weist das Getriebe G gemäß dem achtzehnten Ausführungsbeispiel eine Anschlusswelle AN auf, welche über eine Trennkupplung K0 mit der Antriebswelle GW1 verbindbar ist. Die Anschlusswelle AN dient zur Anbindung an eine getriebeexterne Antriebseinheit, beispielsweise eine Verbrennungskraftmaschine.

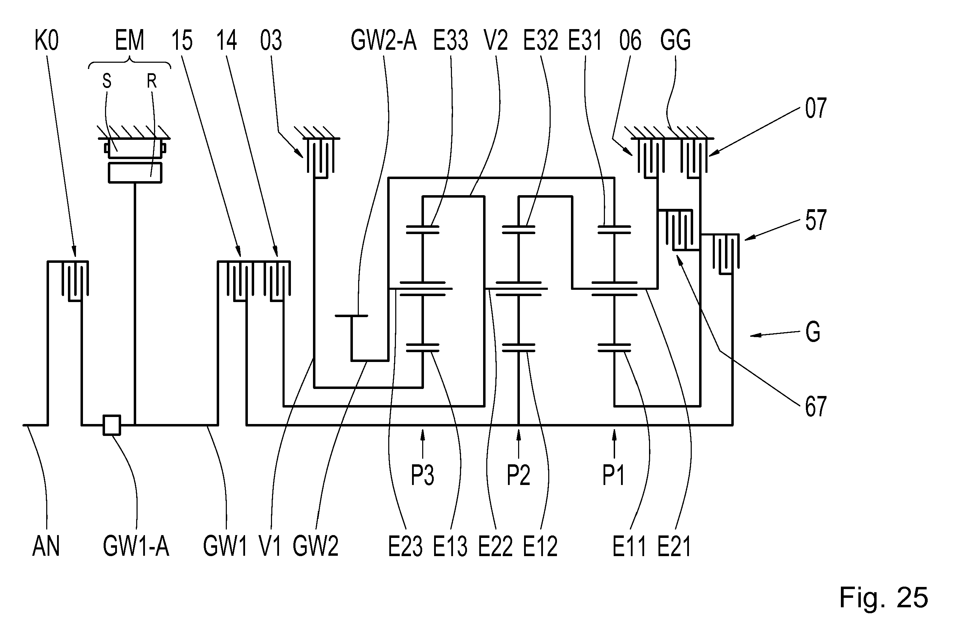

Fig. 25 zeigt schematisch ein Getriebe G entsprechend eines neunzehnten Ausführungsbeispiels der Erfindung, welches im Wesentlichen dem in Fig. 24 dargestellten achtzehnten Ausführungsbeispiel entspricht. Lediglich die geometrische Anordnung der Getriebeelemente wurde verändert, so dass die äußere Schnittstelle GW2-A der Abtriebswelle GW2 nun im Bereich desselben axialen Endes des Getriebes G wie die äußere Schnittstelle GW1-A der Antriebswelle GW1 angeordnet ist.

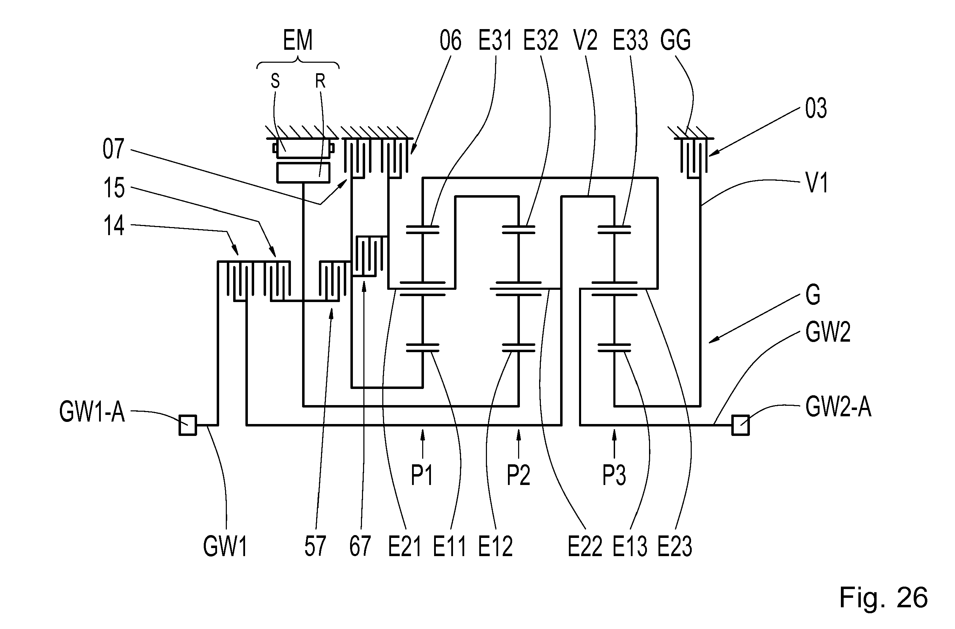

Fig. 26 zeigt schematisch ein Getriebe G entsprechend eines zwanzigsten Ausführungsbeispiels der Erfindung, welches im Wesentlichen dem in Fig. 24 dargestellten achtzehnten Ausführungsbeispiel entspricht. Lediglich die Anbindung der elektrischen Maschine EM wurde verändert, so dass der Rotor R anstatt an der Antriebswelle GW1 nun an dem ersten Element E12 des zweiten Planetenradsatzes P2 angebunden ist.

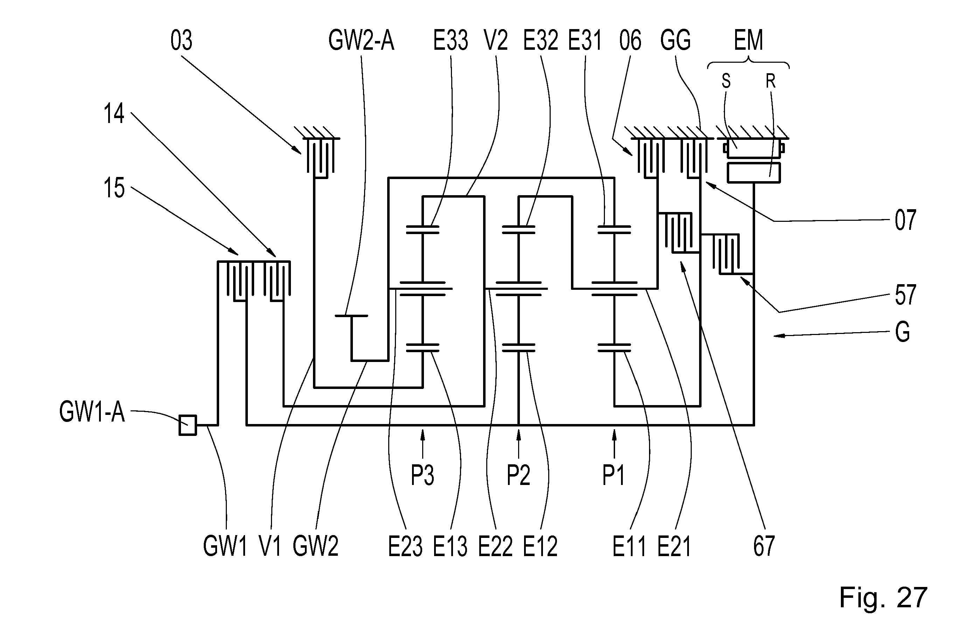

Fig. 27 zeigt schematisch ein Getriebe G entsprechend eines einundzwanzigsten Ausführungsbeispiels der Erfindung, welches im Wesentlichen dem in Fig. 26 dargestellten zwanzigsten Ausführungsbeispiel entspricht. Lediglich die geometrische Anordnung der Getriebeelemente wurde verändert, so dass nun die äußere Schnittstelle GW2-A der Abtriebswelle GW2 im Bereich desselben axialen Endes des Getriebes G wie die äußere Schnittstelle GW1-A der Antriebswelle GW1 angeordnet ist. Die elektrische Maschine EM ist nun am gegenüberliegenden axialen Ende des Getriebes G angeordnet.

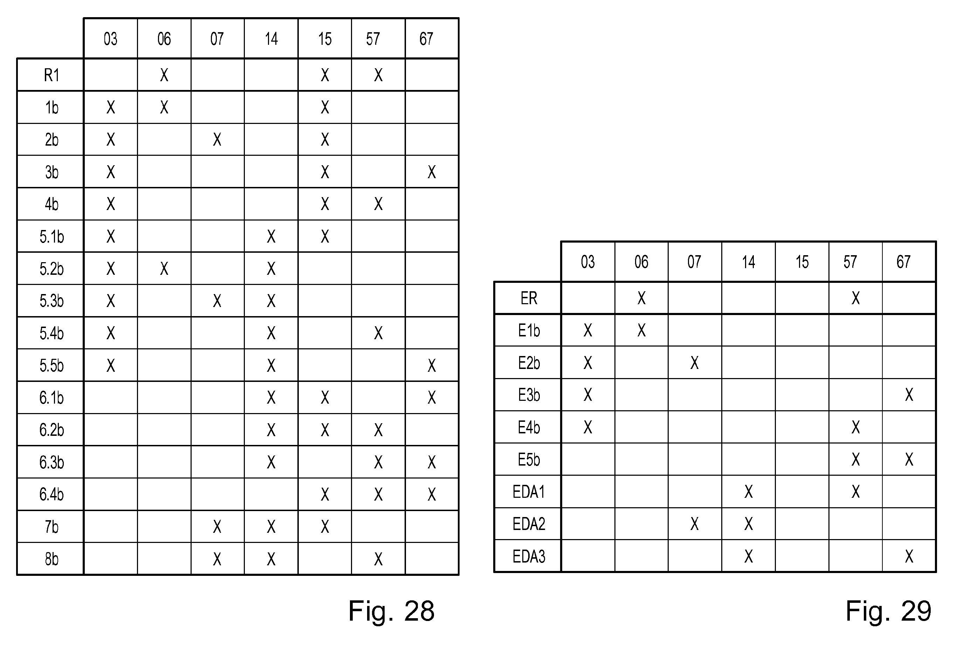

Fig. 28 zeigt ein Schaltschema für die Getriebe G gemäß dem zwanzigsten und dem einundzwanzigsten Ausführungsbeispiel. Darin ist die Bildung des Rückwärtsganges R1 sowie der Vorwärtsgänge 1 b bis 8b zwischen der Antriebswelle GW1 und der Abtriebswelle GW2 dargestellt.

Fig. 29 zeigt ebenso ein Schaltschema für die Getriebe G gemäß dem zwanzigsten und dem einundzwanzigsten Ausführungsbeispiel, in welchem die Bildung der elektrisch antreibbaren Vorwärtsgänge E1 b bis E5b, sowie des elektrisch antreibbaren Rückwärtsganges ER dargestellt ist. Darüber hinaus ist in dem Schaltschema auch die Bildung von drei Überlagerungs-Betriebsmodi EDA1, EDA2, EDA3 dargestellt. In den Spalten des Schaltschemas ist dargestellt, welche der Schaltelemente 03, 06, 07, 14, 15, 57, 67 in welchem elektrisch antreibbaren Gang ER, E1b bis E5b sowie die Überlagerungs-Betriebsmodi EDA1 bis EDA3 geschlossen sind. Das siebte Schaltelement 67 ermöglicht die Bildung zweier elektrisch antreibbarer Vorwärtsgänge E3b, E5b sowie die Bildung eines weiteren Überlagerungs-Betriebsmodus EDA3.

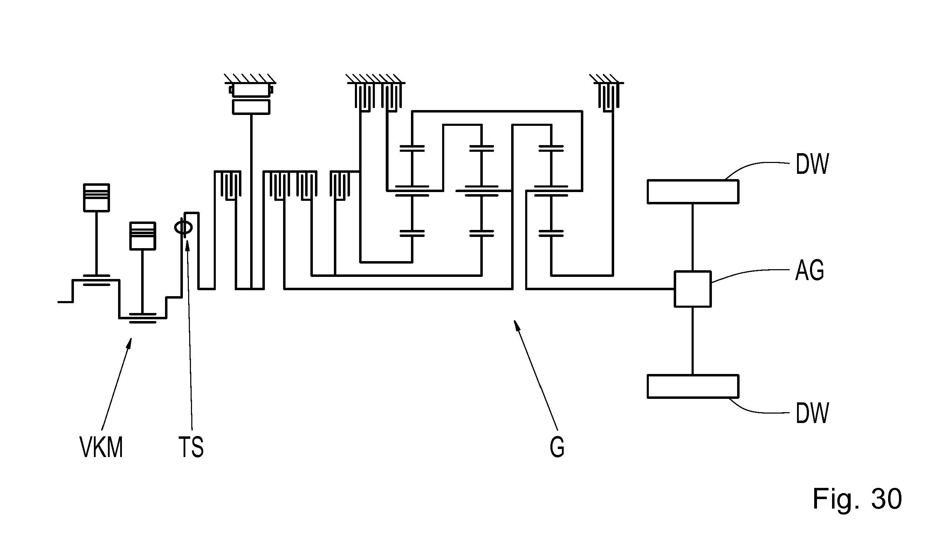

Fig. 30 zeigt schematisch einen Antriebsstrang eines Kraftfahrzeugs. Eine Verbrennungskraftmaschine VKM ist über einen Torsionsschwingungsdämpfer TS mit der Anschlusswelle AN des Getriebes G verbunden. Das in Fig. 30 dargestellte Getriebe G entspricht dem in Fig. 16 dargestellten dreizehnten Ausführungsbeispiel der Erfindung. Dies ist lediglich beispielhaft anzusehen. Die Verbrennungskraftmaschine VKM könnte über den Torsionsschwingungsdämpfer TS auch direkt mit der Antriebswelle GW1 der Getriebes G verbunden sein. Das Getriebe G könnte auch ohne elektrische Maschine EM ausgebildet sein. Der Antriebsstrang könnte mit jedem der gegenständlichen Ausführungsbeispiele, mit oder ohne elektrische Maschine EM, ausgeführt sein. Der Antriebsstrang könnte auch einen hydrodynamischen Drehmomentwandler enthalten, welcher beispielsweise zwischen der elektrischen Maschine EM und der Abtriebswelle GW1 angeordnet ist. Ein solcher Drehmomentwandler kann auch eine Überbrückungskupplung umfassen. Der Fachmann wird Anordnung und räumliche Lage der einzelnen Komponenten des Antriebsstranges je nach den äußeren Randbedingungen frei konfigurieren. Die Abtriebswelle GW2 ist mit einem Achsgetriebe AG verbunden, über welches die an der Abtriebswelle GW2 anliegende Leistung auf Antriebsräder DW des Kraftfahrzeugs verteilt wird.

### Bezugszeichen

- G: Getriebe
- GG: Drehfestes Bauelement
- P1: Erster Planetenradsatz
- E11: Erstes Element des ersten Planetenradsatzes
- E21: Zweites Element des ersten Planetenradsatzes
- E31: Drittes Element des ersten Planetenradsatzes
- P2: Zweiter Planetenradsatz
- E12: Erstes Element des zweiten Planetenradsatzes
- E22: Zweites Element des zweiten Planetenradsatzes
- E32: Drittes Element des zweiten Planetenradsatzes
- P3: Dritter Planetenradsatz
- E13: Erstes Element des dritten Planetenradsatzes
- E23: Zweites Element des dritten Planetenradsatzes
- E33: Drittes Element des dritten Planetenradsatzes
- B1: Erstes Schaltelement
- 03: Erstes Schaltelement
- 06: Zweites Schaltelement
- 07: Drittes Schaltelement
- 14: Viertes Schaltelement
- 15: Fünftes Schaltelement
- 57: Sechstes Schaltelement
- 47: Siebtes Schaltelement
- 67: Siebtes Schaltelement
- V1: Erste Koppelung
- V2: Zweite Koppelung
- 1: Erster Vorwärtsgang
- 2: Zweiter Vorwärtsgang
- 3: Dritter Vorwärtsgang
- 4.1: Vierter Vorwärtsgang
- 4.2: Vierter Vorwärtsgang
- 4.3: Vierter Vorwärtsgang
- 4.4: Vierter Vorwärtsgang
- 5: Fünfter Vorwärtsgang
- 6: Sechster Vorwärtsgang
- 7: Siebter Vorwärtsgang
- 1b: Erster Vorwärtsgang
- 2b: Zweiter Vorwärtsgang
- 3b: Dritter Vorwärtsgang
- 4b: Vierter Vorwärtsgang
- 5.1b: Fünfter Vorwärtsgang
- 5.2b: Fünfter Vorwärtsgang
- 5.3b: Fünfter Vorwärtsgang
- 5.4b: Fünfter Vorwärtsgang
- 6.1b: Sechster Vorwärtsgang
- 6.2b: Sechster Vorwärtsgang
- 6.3b: Sechster Vorwärtsgang
- 6.4b: Sechster Vorwärtsgang
- 7b: Siebter Vorwärtsgang
- 8b: Achter Vorwärtsgang
- E1: Erster elektrisch antreibbarer Vorwärtsgang
- E2: Zweiter elektrisch antreibbarer Vorwärtsgang
- E3: Dritter elektrisch antreibbarer Vorwärtsgang
- E1b: Erster elektrisch antreibbarer Vorwärtsgang
- E2b: Zweiter elektrisch antreibbarer Vorwärtsgang
- E3b: Dritter elektrisch antreibbarer Vorwärtsgang
- E4b: Vierter elektrisch antreibbarer Vorwärtsgang
- E5b: Fünfter elektrisch antreibbarer Vorwärtsgang
- ER: Elektrisch antreibbarer Rückwärtsgang
- ER2: Elektrisch antreibbarer Rückwärtsgang
- ER3: Elektrisch antreibbarer Rückwärtsgang
- EDA1: Erster Überlagerungs-Betriebsmodus
- EDA2: Zweiter Überlagerungs-Betriebsmodus
- EDA3: Dritter Überlagerungs-Betriebsmodus
- R1: Erster Rückwärtsgang
- R2: Zweiter Rückwärtsgang
- R3: Dritter Rückwärtsgang
- GW1: Antriebswelle
- GW1-A: Äußere Schnittstelle der Antriebswelle
- GW2: Abtriebswelle
- GW2-A: Äußere Schnittstelle der Abtriebswelle
- EM: Elektrische Maschine
- S: Stator
- R: Rotor
- AN: Anschlusswelle
- K0: Trennkupplung
- VKM: Verbrennungskraftmaschine
- TS: Torsionsschwingungsdämpfer
- AG: Achsgetriebe
- DW: Antriebsräder

## Patentansprüche

1. Getriebe (G) für ein Kraftfahrzeug, wobei das Getriebe (G) eine Antriebswelle (GW1), eine Abtriebswelle (GW2), einen ersten, zweiten und dritten Planetenradsatz (P1, P2, P3) sowie zumindest ein erstes, zweites, drittes, viertes, fünftes und sechstes Schaltelement (03, 06, 07, 14, 15, 57) aufweist,
- wobei die Planetenradsätze (P1, P2, P3) je ein erstes Element (E11, E12, E13), ein zweites Element (E21, E22, E23) und ein drittes Element (E31, E32, E33) aufweisen, wobei das erste Element (E11, E12, E13) durch ein Sonnenrad des jeweiligen Planetenradsatzes (P1, P2, P3) gebildet ist, wobei das zweite Element (E21, E22, E23) im Falle eines Minus-Radsatzes durch einen Steg und im Falle eines Plus-Radsatzes durch ein Hohlrad des jeweiligen Planetenradsatzes (P1, P2, P3) gebildet ist, wobei das dritte Element (E31, E32, E33) im Falle eines Minus-Radsatzes durch das Hohlrad und im Falle eines Plus-Radsatzes durch den Steg des jeweiligen Planetenradsatzes (P1, P2, P3) gebildet ist,
- wobei die Abtriebswelle (GW2) mit dem dritten Element (E31) des ersten Planetenradsatzes (P1) und mit dem zweiten Element (E23) des dritten Planetenradsatzes (P3) ständig verbunden ist,
- wobei das zweite Element (E21) des ersten Planetenradsatzes (P1) mit dem dritten Element (E32) des zweiten Planetenradsatzes (P2) ständig verbunden ist,
- wobei das Getriebe (G) eine erste Koppelung (V1) und eine zweite Koppelung (V2) aufweist, wobei die erste Koppelung (V1) zwischen dem ersten Element (E13) des dritten Planetenradsatzes (P3) und einem drehfesten Element (GG) des Getriebes (G) besteht, wobei die zweite Koppelung (V2) zwischen dem zweiten Element (E22) des zweiten Planetenradsatzes (P2) und dem dritten Element (E33) des dritten Planetenradsatzes (P3) besteht, wobei eine der beiden Koppelungen (V1, V2) durch eine drehfeste Verbindung gebildet ist und die verbleibende der beiden Koppelungen (V1, V2) durch eine mittels dem ersten Schaltelement (03) schaltbare Verbindung gebildet ist,
- wobei durch Schließen des zweiten Schaltelements (06) das zweite Element (E21) des ersten Planetenradsatzes (P1) drehfest festsetzbar ist,
- wobei durch Schließen des dritten Schaltelements (07) das erste Element (E11) des ersten Planetenradsatzes (P1) drehfest festsetzbar ist,
- wobei durch Schließen des vierten Schaltelements (14) die Antriebswelle (GW1) mit dem zweiten Element (E22) des zweiten Planetenradsatzes (P2) miteinander verbindbar sind,
- wobei durch Schließen des fünften Schaltelements (15) die Antriebswelle (GW1) mit dem ersten Element (E12) des zweiten Planetenradsatzes (P2) verbindbar ist,
- und wobei durch Schließen des sechsten Schaltelements (57) das erste Element (E12) des zweiten Planetenradsatzes (P2) mit dem ersten Element (E11) des ersten Planetenradsatzes (P1) verbindbar ist.

2. Getriebe (G) nach Anspruch 1, **dadurch gekennzeichnet, dass** durch selektives Schließen von drei der sechs Schaltelemente (03, 06, 07, 14, 15, 57) sieben Vorwärtsgänge (1-7) zwischen der Antriebswelle (GW1) und der Abtriebswelle (GW2) schaltbar sind, wobei sich
- der erste Vorwärtsgang (1) durch Schließen des ersten Schaltelements (03), des zweiten Schaltelements (06) und des fünften Schaltelements (15),
- der zweite Vorwärtsgang (2) durch Schließen des ersten Schaltelements (03), des dritten Schaltelements (07) und des fünften Schaltelements (15),
- der dritte Vorwärtsgang (3) durch Schließen des ersten Schaltelements (03), des fünften Schaltelements (15) und des sechsten Schaltelements (57),
- der vierte Vorwärtsgang (4.1, 4.2, 4.3, 4.4) durch Schließen des ersten Schaltelements (03), des vierten Schaltelements (14) und einem weiteren der sechs Schaltelemente (15, 06, 07, 57),
- der fünfte Vorwärtsgang (5) durch Schließen des vierten Schaltelements (14), des fünften Schaltelements (15) und des sechsten Schaltelements (57),
- der sechste Vorwärtsgang (6) durch Schließen des dritten Schaltelements (07), des vierten Schaltelements (14) und des fünften Schaltelements (15), und
- der siebente Vorwärtsgang (7) sich durch Schließen des dritten Schaltelements (07), des vierten Schaltelements (14) und des sechsten Schaltelements (57) ergibt.

3. Getriebe (G) nach einem der vorangehenden Ansprüche, **dadurch gekennzeichnet, dass** das zweite Schaltelement (06) als formschlüssiges Schaltelement ausgebildet ist.

4. Getriebe (G) nach einem der vorangehenden Ansprüche, **dadurch gekennzeichnet, dass** das fünfte Schaltelement (15) als formschlüssiges Schaltelement ausgebildet ist.

5. Getriebe (G) nach einem der vorangehenden Ansprüche, **dadurch gekennzeichnet, dass** äußere Schnittstellen (GW1-A, GW2-A) der Antriebswelle (GW1) und der Abtriebswelle (GW2) koaxial zueinander und an gegenüberliegenden axialen Enden des Getriebes (G) angeordnet sind, wobei von den drei Planetenradsätzen (P1, P2, P3) der dritte Planetenradsatz (P3) den größten axialen Abstand zur äußeren Schnittstelle (GW1-A) der Antriebswelle (GW1) aufweist.

6. Getriebe (G) nach einem der Ansprüche 1 bis 4, **dadurch gekennzeichnet, dass** äußere Schnittstellen (GW1-A, GW2-A) der Antriebswelle (GW1) und der Abtriebswelle (GW2) koaxial zueinander sind, wobei von den drei Planetenradsätzen (P1, P2, P3) der dritte Planetenradsatz (P3) den kürzesten axialen Abstand zur äußeren Schnittstelle (GW1-A) der Antriebswelle (GW1) aufweist.

7. Getriebe (G) nach einem der vorangehenden Ansprüche, **dadurch gekennzeichnet, dass** das Getriebe (G) ein siebentes Schaltelement (47 / 67) aufweist, wobei durch Schließen des siebenten Schaltelements (47 / 67) das erste Element (E11) des ersten Planetenradsatzes (P1) entweder mit dem zweiten Element (E22) des zweiten Planetenradsatzes (P2) oder mit dem zweiten Element (E21) des ersten Planetenradsatzes (P1) verbindbar ist.

8. Getriebe (G) nach Anspruch 7, **dadurch gekennzeichnet, dass** durch selektives Schließen von drei der sieben Schaltelemente (03, 06, 07, 14, 15, 57, 47/67) acht Vorwärtsgänge (1b-8b) zwischen der Antriebswelle (GW1) und der Abtriebswelle (GW2) schaltbar sind, wobei sich
- der erste Vorwärtsgang (1 b) durch Schließen des ersten Schaltelements (03), des zweiten Schaltelements (06) und des fünften Schaltelements (15),
- der zweite Vorwärtsgang (2b) durch Schließen des ersten Schaltelements (03), des dritten Schaltelements (07) und des fünften Schaltelements (15),
- der dritte Vorwärtsgang (3b) durch Schließen des ersten Schaltelements (03), des fünften Schaltelements (15) und des siebenten Schaltelements (47 / 67),
- der vierte Vorwärtsgang (4b) durch Schließen des ersten Schaltelements (03), des fünften Schaltelements (15) und des sechsten Schaltelements (57),
- der fünfte Vorwärtsgang (5.1 b, 5.2b, 5.3b, 5.4b) durch Schließen des ersten Schaltelements (03), des vierten Schaltelements (14) und einem weiteren der sieben Schaltelemente (15, 06, 07, 57, 47/67),
- der sechste Vorwärtsgang (6.1 b, 6.2b, 6.3b, 6.4b) durch Schließen von drei der folgenden Schaltelemente: viertes Schaltelement (14), fünften Schaltelement (15), sechstes Schaltelement (57), siebentes Schaltelement (47 / 67),
- der siebente Vorwärtsgang (7b) durch Schließen des dritten Schaltelements (07), des vierten Schaltelements (14) und des fünften Schaltelements (15), und
- der achte Vorwärtsgang (8b) sich durch Schließen des dritten Schaltelements (07), des vierten Schaltelements (14) und des sechsten Schaltelements (57) ergibt.

9. Getriebe (G) nach einem der vorangehenden Ansprüche, **dadurch gekennzeichnet, dass** ein Rückwärtsgang (R1) zwischen der Antriebswelle (GW1) und der Abtriebswelle (GW2) durch Schließen des zweiten Schaltelements (06), des fünften Schaltelements (15) und des sechsten Schaltelements (57) ausbildbar ist.

10. Getriebe (G) nach Anspruch 9, **dadurch gekennzeichnet, dass** durch Schließen des siebenten Schaltelements (47) das erste Element (E11) des ersten Planetenradsatzes (P1) mit dem zweiten Element (E22) des zweiten Planetenradsatzes (P2) verbindbar ist, wobei sich ergänzend oder alternativ zum Rückwärtsgang (R1) ein zweiter Rückwärtsgang (R2) durch Schließen des zweiten Schaltelements (06), des fünften Schaltelements (15) und des siebenten Schaltelements (47), und/oder ein dritter Rückwärtsgang (R3) durch Schließen des dritten Schaltelements (07), des fünften Schaltelements (15) und des siebenten Schaltelements (47) ergibt.

11. Getriebe (G) nach einem der vorangehenden Ansprüche, **dadurch gekennzeichnet, dass** das Getriebe (G) eine elektrische Maschine (EM) mit einem Stator (S) und einem Rotor (R) aufweist, wobei der Rotor (R) entweder mit der Antriebswelle (GW1) oder mit dem ersten Element (E12) des zweiten Planetenradsatzes (P2) ständig verbunden ist.

12. Getriebe (G) nach Anspruch 11, **dadurch gekennzeichnet, dass** das Getriebe (G) eine Anschlusswelle (AN) aufweist, wobei die Anschlusswelle (AN) über eine Trennkupplung (K0) mit der Antriebswelle (GW1) verbindbar ist.

13. Getriebe (G) nach Anspruch 11, **dadurch gekennzeichnet, dass** der Rotor (R) mit dem ersten Element (E12) des zweiten Planetenradsatzes (P2) ständig verbunden ist, wobei durch selektives Schließen von zwei der ersten bis sechsten Schaltelemente (03, 06, 07, 14, 15, 57) drei elektrisch antreibbare Vorwärtsgänge (E1-E3) zwischen dem ersten Element (E12) des zweiten Planetenradsatzes (P2) und der Abtriebswelle (GW2) schaltbar sind, wobei sich
- der erste elektrisch antreibbare Vorwärtsgang (E1) durch Schließen des ersten Schaltelements (03) und des zweiten Schaltelements (06)
- der zweite elektrisch antreibbare Vorwärtsgang (E2) durch Schließen des ersten Schaltelements (03) und des dritten Schaltelements (07), und
- der dritte elektrisch antreibbare Vorwärtsgang (E3) sich durch Schließen des ersten Schaltelements (03) und des sechsten Schaltelements (57) ergibt.

14. Getriebe (G) nach Anspruch 11, **dadurch gekennzeichnet, dass** der Rotor (R) mit dem ersten Element (E12) des zweiten Planetenradsatzes (P2) ständig verbunden ist, wobei durch selektives Schließen von zwei der ersten bis siebenten Schaltelemente (03, 06, 07, 14, 15, 57, 47/67) fünf elektrisch antreibbare Vorwärtsgänge (E1 b-E5b) zwischen dem ersten Element (E12) des zweiten Planetenradsatzes (P2) und der Abtriebswelle (GW2) schaltbar sind, wobei sich
- der erste elektrisch antreibbare Vorwärtsgang (E1 b) durch Schließen des ersten Schaltelements (03) und des zweiten Schaltelements (06)
- der zweite elektrisch antreibbare Vorwärtsgang (E2b) durch Schließen des ersten Schaltelements (03) und des dritten Schaltelements (07),
- der dritte elektrisch antreibbare Vorwärtsgang (E3b) durch Schließen des ersten Schaltelements (03) und des siebenten Schaltelements (47/67) ergibt,
- der vierte elektrisch antreibbare Vorwärtsgang (E4b) durch Schließen des ersten Schaltelements (03) und des sechsten Schaltelements (57) ergibt, und
- der fünfte elektrisch antreibbare Vorwärtsgang (E5b) sich durch Schließen des sechsten Schaltelements (57) und des siebenten Schaltelements (47/67) ergibt.

15. Antriebsstrang für ein Kraftfahrzeug, wobei der Antriebsstrang eine Verbrennungskraftmaschine (VKM), ein Getriebe (G) nach einem der Ansprüche 1 bis 14 sowie ein mit Rädern (DW) des Hybridfahrzeugs verbundenes Achsgetriebe (AG) aufweist, wobei die Antriebswelle (GW1) des Getriebes (G) über einen Torsionsschwingungsdämpfer (TS) entweder direkt oder über die Trennkupplung (K0) mit der Verbrennungskraftmaschine (VKM) drehelastisch verbunden ist, und wobei die Abtriebswelle (GW2) des Getriebes (G) mit dem Achsgetriebe (AG) antriebswirkverbunden ist.
